# EUROPÄISCHE PATENTSCHRIFT

(11) **EP 1 077 795 B1**
(45) Veröffentlichungstag und Bekanntmachung des Hinweises auf die Patenterteilung: **23.11.2005**
(21) Anmeldenummer: 99923527.8
(22) Anmeldetag: 05.05.1999
(51) Int. Cl.: B27D 5/00, B29C 63/00

(54) **ANLEIMEN EINES BANDFÖRMIGEN BELAGES AN EINE SCHMALFLÄCHE EINES PLATTENELEMENTS**
GLUING A BAND-LIKE COVER ONTO A NARROW SURFACE OF A PLATE ELEMENT
COLLAGE D'UN REVETEMENT SOUS FORME DE BANDE SUR UNE SURFACE ETROITE D'UN ELEMENT SOUS FORME DE PANNEAU

(30) Priorität: 13.05.1998 DE 19821267; 29.09.1998 DE 19844572; 02.12.1998 DE 19855428; 02.03.1999 DE 19908988
(43) Veröffentlichungstag der Anmeldung: 28.02.2001
(73) Patentinhaber: Henkel Dorus GmbH, 73441 Bopfingen (DE)
(72) Erfinder: SCHOLZ, Konrad, D-01705 Pesterwitz (DE)
(74) Vertreter: Mathes, Nikolaus
(86) Internationale Anmeldenummer: PCT/EP1999/003065
(87) Internationale Veröffentlichungsnummer: WO 1999/058307

(56) Entgegenhaltungen:
- DE-A- 3 912 742
- DE-A- 4 315 792
- DE-A- 19 615 879
- DE-A- 19 630 273
- DE-U- 29 817 408
- DE-U- 29 819 350
- DE-U- 29 821 399
- DE-U- 29 903 734
- US-A- 4 374 692

## Beschreibung

Die Erfindung betrifft das Anleimen eines bandförmigen Belags an eine Schmalfläche (Kante) eines Plattenelements, insbesondere einer Span-, Faser- oder Massivholzplatte, wobei man den Belag mit mindestens einem Andruckelement an die Schmalfläche anpreßt. Zum Verkleben ist der Belag üblicherweise mit einem Schmelzklebstoff beschichtet. Im Rahmen der Erfindung ist es aber auch grundsätzlich möglich, daß der Klebstoff zunächst auf die Schmalfläche, die in der Fachsprache "Kante" genannt wird, aufgebracht wird und der Belag dann an die Schmalfläche angepreßt wird. Bekannt ist, daß die Andruckelemente als Andruckrolle oder Gleitschuh ausgebildet sein können. Die eingesetzten Plattenelemente sind üblicherweise auf ihrer Ober- und/oder Unterseite beschichtet, zur Ausführung des erfindungsgemäßen Verfahrens und zur Anwendung des erfindungsgemäßen Gleitschuhs ist eine solche Beschichtung aber nicht notwendig.

### Stand der Technik

Ein solches Anleimen oder Beschichten von geraden und profilierten Schmalflächen von Plattenelementen, insbesondere von Holzwerkstoffen, mit Beschichtungsmaterialien wird üblicherweise mit sogenannten Kantenanleimmaschinen durchgeführt, an denen die Plattenelemente mit hoher Geschwindigkeit vorbeilaufen. Die Beschichtungsmaterialien können aus Kunststoff (Melamin, PVC, ABS, PP) bestehen bzw. auf Papierbasis aufgebaut sein. Neben Melamin und Polyester können auch Furniere als Kantenmaterial verarbeitet werden. Das Beschichtungsmaterial, auf dessen eine Seite ein Schmelzklebstoff aufgebracht ist, wird durch geeignete Andruckvorrichtungen an die Schmalflächen fest angedrückt. Danach werden überstehende Kanten mit einem Ziehmesser abgeschnitten oder abgefräst.

Die geraden Flächen werden üblicherweise mit Hilfe von Andruckrollen, deren Durchmesser bis 200 mm betragen kann, unter Zuhilfenahme von Schmelzklebstoff und Kantenband beschichtet. Der Rollenandruck dient dazu, den Belag auf dem vorbeilaufenden Werkstück zu fixieren. Der Vorgang kann mit einer oder mehreren hintereinander angeordneten Rollen erfolgen. Durch das Rollen entsteht eine unruhige Oberfläche. Außerdem erhält man durch den flächigen Andruck keine sehr dichte Fuge. Die Faktoren Welligkeit und geringe Fugendichtheit sind bei hellen, einfarbigen Dekoren oder glänzenden Oberflächen besonders störend.

Ein Verfahren zum Beschichten der Schmalflächen von Plattenelementen ist aus der DE 196 30 273 A1 (Dr. Rudolf Schieber Chemische Fabrik GmbH & Co KG) bekannt. Hier ist die Andruckfläche des als Gleitschuh ausgebildeten Andruckelements in Längsrichtung betrachtet nach außen gewölbt. Auf diese Weise wird auf einfache und wenig aufwendige Weise eine Welligkeit des angeleimten Belages in Längsrichtung der Schmalfläche stark herabgesetzt.

Verfahren zum Beschichten von Schmalflächen eines Plattenelements mit Hilfe von Gleitschuhen sind seit 1988 außerdem aus der DD 287 606 A7, der DE 37 40 964 A1 und der DE 43 15 792 A1 bekannt. Ein Vorteil beim Einsatz von Gleitschuhen im Gegensatz zu Andruckrollen, wie sie beispielsweise aus der DE 93 06 484 U 1 bekannt sind, liegt in der deutlich geringeren Welligkeit der beschichteten Schmalflächen.

Im folgenden werden weitere, bei der Herstellung von beschichteten Plattenelementen auftretende Probleme beschrieben. Zur Klarstellung wird der Grenzbereich zwischen den Schmalflächen und den Hauptflächen (Breitflächen) der Plattenelemente als "Grenzkante" bezeichnet, denn der Begriff "Kante" wird in der Fachsprache bereits für die gesamte Schmalfläche von Plattenelementen benutzt.

Mit den z. B. aus der DE 43 15 792 A1, der DD 287 606 A7 und DE 196 30 273 A1 bekannten Gleitschuhen wird auf die gesamte Schmalfläche eine Anpreßkraft ausgeübt, wobei die Anpreßkraft über die gesamte Breite der Schmalfläche konstant ist. Aufgrund des flächigen Anpressens ist eine relativ große Kraft auf den Gleitschuh erforderlich, um den notwendigen Anpreßdruck an jeder Stelle der Schmalfläche zu erreichen.

Ein weiterer Nachteil im Stand der Technik liegt vor, wenn, wie es üblich ist, mehrere hintereinander angeordnete Andruckelemente zum Anpressen des bandförmigen Belages an die Schmalfläche vorgesehen ist. Der auf der Rückseite des bandförmigen Belages aufgebrachte Schmelzklebstoff, welcher bereits beim Kontakt mit der rohen Schmalfläche abkühlt und entsprechend viskoser wird, kühlt sich auf dem relativ langen Weg vom ersten bis zum letzten Andruckelement soweit ab, daß ein einwandfreies Anpressen und Ankleben des Belages durch das letzte Andruckelement nicht in jedem Falle gewährleistet ist.

Die Erfindung betrifft daher ein Andruckelement für eine Kantenanleimmaschine zum Anleimen eines bandförmigen Belags mit einem Klebstoff an eine im Querschnitt gerade oder gekrümmte Schmalfläche (Kante) eines Plattenelements, insbesondere einer Span-, Faser- oder Massivholzplatte. Ein derartiges Andruckelement ist beispielsweise aus der DE 196 30 273 A1 bekannt.

Werden in dem Verfahren nach der DE 196 30 273 A1 abgerundete Schmalflächen bei unsachgemäßer Einstellung des Gleitschuhs beschichtet, so erhält man oft in Längsrichtung verlaufende Kanten an der beschichteten Oberfläche anstelle einer vollständig abgerundeten Schmalfläche. Diese Kantenbildung ist zwar minimal, wirkt aber störend. Der Effekt tritt insbesondere bei Plattenelementen mit einem relativ weichem Kern auf, z. B. bei Span- oder Faserplatten, die aufgrund ihrer Herstellung relativ dichte und kompakte Außenflächen haben, aber im Inneren sehr viel weniger dicht sind.

Die für die Möbelherstellung vorgesehenen beschichteten Plattenelemente sollen oft an ihren Schmalflächen mit abgerundeten Kanten versehen werden, wobei die Schmalflächen einschließlich ihrer Kanten ebenfalls beschichtet sein sollen. Die abgerundeten Grenzkanten sollen Krümmungsradien von 1 bis 5 mm oder mehr haben.

Im Stand der Technik werden auf die unbeschichtete Schmalfläche eines ansonsten beschichteten Plattenelementes ein relativ dicker Belag mit einer Stärke bis zu 5 mm aufgeklebt, welcher in der Fachsprache auch "Dickkante" genannt wird. Dieser Belag besteht üblicherweise aus PVC (Polyvinylchlorid), ABS (Acrylnitril-Butadien-Styrol), PP (Polypropylen) oder aus Furnier. Nach dem Aufkleben des Belags an die Schmalfläche werden die Überstände an beiden Kanten des Belages derart abgefräst und anschließend mit speziellen Ziehklingen bearbeitet, so daß man abgerundete Grenzkanten mit dem gewünschten Krümmungsradius erhält. Durch die Bearbeitung mit speziellen Ziehklingen erhält man die gewünschten glatten Oberflächen im Grenzkantenbereich.

Dieses Verfahren hat mehrere Nachteile. Bei bedruckten Kanten zeigt der Grenzkantenbereich nach dem Abfräsen nicht mehr das Muster wie im übrigen Bereich der Schmalfläche. Infolge der Dicke des Belages ist der Materialaufwand beträchtlich und führt außerdem zu Problemen bei der Entsorgung sowohl bei der Herstellung, bei der eine erhebliche Menge an Kunststoffabfall auftritt, als auch bei der Entsorgung der aus diesen Plattenelementen hergestellten Möbelstücken. So dürfen beispielsweise diese Möbelstücke nicht verbrannt werden, wenn die Schmalflächen mit dicken Belägen aus PVC beschichtet sind.

Zum Anpressen des mit dem Schmelzklebstoff beschichteten Belages an die Schmalfläche ist es bekannt, als Andruckelemente Andruckrollen und/oder Gleitschuhe einzusetzen. Um eine hohe Verarbeitungsgeschwindigkeit zu erreichen, ist es gewünscht, daß der Schmelzklebstoff nach dem Anpressen so rasch wie möglich auf 40 °C oder sogar auf Raumtemperatur abgekühlt wird, so daß sehr schnell eine hohe Klebefestigkeit erreicht wird. Dazu sind Glätt-Kühlschuhe mit Kühlmittelkanälen bekannt (DE 37 40 964 A1).

Dienen jedoch die Andruckelemente gleichzeitig zum Anpressen und zur Kühlung, so wird zwar der Schmelzklebstoff im angeklebten Bereich des bandförmigen Belages ausreichend gekühlt, nicht aber der Klebstoff am Überstand des Belages. Beim nachfolgenden Abtrennen des Überstandes mit einem Ziehmesser oder einem Fräsaggregat gelangt daher noch weicher Schmelzklebstoff auf die Schneide des Messers bzw. des Fräsaggregats und von dort aus auf den Rand der beschichteten Breitfläche des Plattenelementes.

Aus diesem Grunde wird im Stand der Technik vor dem Abfräsen der Kanten des beschichteten Plattenelementes ein flüssiges Trennmittel auf den Kantenbereich aufgetragen. Nach dem Abfräsen des Plattenelementes, um das gewünschte Kantenprofil zu erhalten, ist nur noch der beschichtete Rand der Breitfläche des Plattenelementes vom Trennmittel bedeckt, nicht aber die Schmalfläche. Damit wird erreicht, daß der Schmelzklebstoff nur an der Schmalfläche, nicht aber an dem Rand der beschichteten Breitfläche des Plattenelementes haftet. Nachteilig sind hier der zusätzliche Verfahrensschritt, um das Trennmittel aufzutragen, und die nicht unerheblichen Kosten des Trennmittels.

Aus der DE 34 15 053 C2 ist ein Verfahren der eingangs genannten Art zum Anleimen eines bandförmigen Belages mittels Schmelzkleber an die Schmalfläche des Plattenelementes im Einlegesystem bekannt geworden. Beim Einlegeverfahren ist die Schmalfläche des Plattenelementes am Rande mit einer Aussparung ausgestattet, in die sich der bandförmige Belag einlegt, so daß er nach dem Abschluß des Verfahrens bündig an die Oberseite der Beschichtung der Breitfläche des Plattenelementes anschließt. Damit im Stoßbereich zwischen dem bandförmigen Belag und der Beschichtung der Breitfläche kein Schmelzkleber austreten kann und keine sichtbare Klebstoffuge entsteht, werden in diesem Dokument die folgenden Verfahrensschritte vorgeschlagen. Verwendet wird ein bandförmiger Belag, dessen Breite größer als die Breite der zu bedeckenden Schmalfläche ist. Der Belag wird mit seiner Klebeseite mit einem Teilbereich seiner Breite an die Schmalfläche des Plattenelementes angedrückt. In dem noch nicht angeklebten Bereich des Belages wird der Schmelzkleber abgekühlt. Der über die Breite der zu bedeckenden Schmalfläche überstehende Bereich des bandförmigen Belages wird abgetrennt. Der Schmelzkleber wird dann im noch nicht angeklebten Bereich des bandförmigen Belages wieder erwärmt und dadurch "reaktiviert". Schließlich wird der bandförmige Belag vollflächig an die zu bedeckende Schmalfläche des Plattenelementes angedrückt.

Da vor dem Abtrennen des Überstandes der dort vorhandene Schmelzkleber abgekühlt wird, so daß er nicht mehr klebrig ist, ist ein Abschneiden mittels eines Fräsers möglich, da der Fräser durch den erkalteten Schmelzkleber nicht verschmieren kann. Nachteilig ist der zum Erwärmen des erkalteten Schmelzklebstoffs dienende zusätzliche Verfahrensschritt, welcher nicht nur umständlich ist, sondern auch zu einer Begrenzung der Verarbeitungsgeschwindigkeit führt.

### Aufgabe und Lösung bezüglich des erfindungsgemäßen Andruckelementes

Gegenüber dem Stand der Technik, insbesondere gegenüber der DE 196 30 273 A1, liegt der Erfindung die Aufgabe zugrunde, ein Andruckelement der genannten Art zu entwickeln, mit dem die Oberfläche der beschichteten Schmalfläche weiter verbessert werden kann, wobei insbesondere quer verlaufende Wellen vermieden werden sollen und eine besonders dichte Klebstoffuge zwischen dem bandförmigen Belag und dem Plattenelement erreicht werden soll. Unter dem Begriff "quer verlaufende Wellen" sind Wellen des bandförmigen Belages zu verstehen, deren Wellenkämme quer zur Längsrichtung der Schmalfläche verlaufen. Die Fugendichtheit soll derart hoch sein, so daß die zwischen dem bandförmigen Belag und der Schmalfläche an deren Grenzkante verlaufende Klebstoffuge nach dem Abschneiden des Überstandes mit dem bloßen Auge nicht mehr bzw. kaum mehr sichtbar ist. Diese Forderungen sollen auf möglichst wirtschaftliche Weise erfüllt werden, wobei nur geringfügige Änderungen an bekannten Kantenanleimmaschinen notwendig sein sollen. Außerdem soll die Geschwindigkeit beim Beschichten der Schmalflächen weiter gesteigert werden können, ohne daß Qualitätseinbußen in Kauf genommen werden müssen.

Diese Aufgabe wird erfindungsgemäß gelöst durch ein Andruckelement für eine Kantenanleimmaschine zum Anleimen eines bandförmigen Belages mit einem Klebstoff an eine im Querschnitt gerade oder gekrümmte Schmalfläche eines Plattenelementes, insbesondere einer Span-, Faser- oder Massivholzplatte, dadurch gekennzeichnet, dass das Andruckelement als Gleitschuh ausgebildet ist und einen linienartigen Kontaktbereich aufweist, wobei die dem Belag zugewandte Fläche des Gleitschuhs im Querschnitt spitz zuläuft.

Als "Andruckfläche" ist in dieser Anmeldung der Teil des Andruckelements zu verstehen, der im Betrieb der Schmalfläche gegenüberliegt. Unter dem Begriff "Kontaktbereich" wird hier der Teil der Andruckfläche verstanden, der im Betrieb unmittelbar am Belag anliegt, also diesen berührt. Dieser Kontaktbereich ist erfindungsgemäß und im Gegensatz zum Stand der Technik in der Regel nicht identisch mit der "Andruckfläche", sondern stellt nur einen Teil dieser Andruckfläche dar.

Wenn auf eine Richtung Bezug genommen wird, so handelt es sich um die Bewegungsrichtung der Schmalfläche entlang der Gleitschuhe.

Da der Belag mit dem erfindungsgemäßen Gleitschuh an einer nahezu linienförmigen Anpreßfläche an die Schmalfläche angedrückt wird, kann ein hoher Anpreßdruck bei nur mäßiger Kraft auf den Gleitschuh und damit eine hohe Fugendichtheit (besonders schmale Klebstoff-Fuge) erreicht werden. Der hohe Anpreßdruck sorgt außerdem für eine besonders gute Verankerung des bandförmigen Belages mit der Schmalfläche, da der Schmelzklebstoff in die offenporige Span- oder MdF-Platte eingepreßt wird.

Die im Stand der Technik auftretenden, quer zur Schmalfläche verlaufenden Wellen lassen sich mit dem erfindungsgemäßen Gleitschuh nahezu vollständig vermeiden, wenn dessen linienartiger Kontaktbereich schräg, also im Winkel zur Längsrichtung der Schmalfläche angeordnet ist. In diesem Fall schiebt der linienartige Kontaktbereich eventuell vorhandene Wellen vor sich her, -bevor der Schmelzklebstoff zu kalt und damit zu viskos geworden ist.

Erfindungsgemäß ist es nicht notwendig, daß der linienartige Kontaktbereich in Längsrichtung des Gleitschuhs verläuft. Bei der Verwendung des erfindungsgemäßen Gleitschuhs ist nur die Ausrichtung des linienartigen Kontaktbereiches zur Schmalfläche, nicht aber die Ausrichtung des gesamten Gleitschuhs zur Schmalfläche von Bedeutung. Falls der linienartige Kontaktbereich in Längsrichtung des Gleitschuhs verläuft, so wird der gesamte Gleitschuh schräg zur Schmalfläche eingestellt. Hat andererseits der linienartige Kontaktbereich bereits den gewünschten Winkel zur Längsrichtung des Gleitschuhs, so kann dieser parallel zur Schmalfläche des Plattenelements ausgerichtet werden.

Erfindüngsgemäβ wird vorgeschlagen, daß die dem Belag zugewandte Fläche des Gleitschuhs, also die "Andruckfläche", im Querschnitt spitz zuläuft, wobei die spitze Kante den "Kontaktbereich" bildet.

In diesem Fälle hat man im Gegensatz zum Stand der Technik einen linienartigen Kontaktbereich, der zu den oben genannten Vorteilen der fehlenden Welligkeit und der hohen Fugendichtheit führt.

Bei der Verwendung des erfindungsgemäßen Gleitschuhs überdeckt der linienartige Kontaktbereich vorzugsweise die gesamte Breite der Schmalfläche. Um nicht nur einen hohen Anpreßdruck, sondern auch eine erhöhte Anpreßdauer zu erreichen, kann es von Vorteil sein, wenn der linienartige Kontaktbereich in einem besonders kleinen Winkel zur Schmalfläche eingestellt wird. Der linienartige Kontaktbereich und damit auch der Gleitschuh müssen dann entsprechend lang sein. Als vorteilhaft hat es sich herausgestellt, wenn der Gleitschuh eine Länge von bis zu 500 mm und insbesondere von 30 bis 300 mm hat.

Weiterhin wird vorgeschlagen, daß der linienartige Kontaktbereich in einer geraden Linie verläuft. Es ist jedoch auch möglich und liegt im Rahmen der Erfindung, wenn dieser Kontaktbereich in einer gekrümmten Linie verläuft. Auf diese Weise kann eine über die Breite der Schmalfläche unterschiedliche Einwirkung des Gleitschuhs erreicht werden, wenn dies gewünscht wird.

Schließlich kann der linienartige Kontaktbereich parallel oder schräg zur Längsachse des Gleitschuhs und insbesondere diagonal dazu verlaufen. Wesentlich ist nur, daß bei der Verwendung des Gleitschuhs der linienartige Kontaktbereich einen Winkel mit der Längsrichtung der Schmalfläche bildet, also nicht parallel zur Längsrichtung der Schmalfläche verläuft.

Die Erfindung betrifft auch ein System von Andruckelementen für eine Kantenanleimmaschine zum Andrücken eines mit Klebstoff beschichteten bandförmigen Belags an eine im Querschnitt gerader oder gekrümmte Schmalfläche (Kante) eines Plattenelements, insbesondere einer Span-, Faser- oder Massivholzplatte.

Mit diesem System von Andruckelementen läßt sich das gesamte Verfahren zum Anleimen des bandförmigen Belages durchführen, wobei die oben genannte erfindungsgemäße Aufgabe gelöst wird. Dazu wird vorgeschlagen, daß das als zeitlich erstes einzusetzendes Andruckelement als an sich bekannte Andruckrolle, das danach einzusetzende Andruckelement als oben genannter erfindungsgemäßer Gleitschuh und das danach einzusetzende Andruckelement als weiterer Gleitschuh ausgebildet ist, welcher beim Andrücken nur auf eine oder beide Grenzbereiche zwischen der Schmalfläche und den Breitflächen des Plattenelementes wirkt, insbesondere ohne daß der Belag in den Grenzbereichen geknickt wird. Auf diese Weise wird ein besonders hoher Anpreßdruck des Belages im Bereich der Grenzkanten und damit eine äußerst schmale Klebstoffuge in diesem Bereich erreicht.

Dieser weitere Gleitschuh kann unterschiedlich ausgebildet sein. Vorgeschlagen wird, daß der weitere Gleitschuh eine konkave Andruckfläche hat, die im wesentlichen aus zwei ebenen, insbesondere im Winkel von 45 bis 60° zueinander liegenden, Flächen besteht.

Zur Vermeidung von Verschmutzungen der Andruckfläche sowie des Kantenmaterials ist es außerdem bevorzugt, wenn die Einlaufzone dieses weiteren Gleitschuhs in Längsrichtung abgerundet ist. Zum gleichen Zweck wird außerdem vorgeschlagen, daß die Einlaufzone des Gleitschuhs in Querrichtung abgerundet ist.

Außerdem sollen erfindungsgemäß die in Längsrichtung verlaufenden Kanten im Falle einer abgerundeten Schmalfläche, aber auch quer verlaufende Wellen vermieden werden. Schließlich sollen Plattenelemente auf wirtschaftlichere Weise herstellbar sein, die Schmalflächen mit abgerundeten Grenzkanten haben, deren Krümmungsradius unterhalb von 10 mm und insbesondere bei 5 mm und weniger liegt. Die Entsorgungsprobleme bei derartigen bekannten Plattenelementen sollen außerdem nicht mehr auftreten.

Dazu wird vorgeschlagen, daß der den Belag als erstes anpressende erste Bereich der Andruckfläche so ausgebildet ist, daß der Belag nur an einem Längsstreifen der Schmalfläche angepreßt wird, und daß die nachfolgenden Bereiche so ausgebildet sind, daß deren Kontaktbereich, ausgehend vom Kontaktbereich des vorherigen Bereichs, quer zur Längsrichtung und kontinuierlich ausgeweitet ist.

Mit der "Einlaufzone" wird derjenige Bereich der Andruckfläche der Gleitschuhe bezeichnet, der als erster mit dem neuen Kantenmaterial in Berührung kommt. Entsprechend wird mit dem Begriff "Auslaufzone" der entgegengesetzte Bereich bezeichnet.

Erfindungsgemäß wird der bandförmige Belag also, vorzugsweise mit nur einem Gleitschuh, zunächst an eine schmale Längszone der Schmalfläche des Plattenelements angeklebt und dort fixiert. Von dieser Längszone ausgehend weitet man mit dem gleichen Gleitschuh den Kontaktbereich allmählich aus, bis der Belag an der gesamten Schmalfläche angepreßt worden ist. Wesentlich dabei ist, daß der Belag nicht wie im Stand der Technik vollflächig an die Schmalfläche angepreßt wird, sondern daß ein allmähliches Ausweiten des Kontaktbereichs erfolgt.

Es liegt im Rahmen der Erfindung, wenn die der linienförmigen Anpreßfläche benachbarten Bereiche des Gleitschuhs mit deutlich niedrigerem Druck am bandförmigen Belag anliegen oder diesen drucklos nur berühren.

Besonders vorteilhaft ist es, wenn die benachbarten Bereiche überhaupt nicht am bandförmigen Belag anliegen oder - mit anderen Worten -, wenn die zeitlich nachfolgenden Kontaktbereiche die vorherigen Kontaktbereiche nicht einschließen. In diesem Fall wirkt die auf den Gleitschuh ausgeübte Kraft nur auf die linienförmige Anpreßfläche, die damit einen besonders hohen Druck auf den Belag ausübt.

Erfindungsgemäß können mehrere hintereinander angeordnete Gleitschuhe mit der erfindungsgemäß ausgestalteten Andruckfläche vorgesehen sein. Zum Beispiel können bei einem Krümmungsradius der Schmalfläche von 20 mm Gleitschuhe mit dem weiter unten im Ausführungsbeispiel erläuterten angeschnittenen konkaven Profil mit Krümmungsradien von 20,8 mm für den ersten Gleitschuh und 20,0 mm, 19,5 mm für die folgenden Gleitschuhe und 18 mm für den letzten, insbesondere die Grenzkante anpressenden Gleitschuh eingesetzt werden. Vorzugsweise sind jedoch sämtliche Kontaktbereiche an nur einem Gleitschuh vorgesehen, um das genannte nachteilige vorzeitige Abkühlen des Schmelzklebstoffs während des Beschichtungsvorgangs zu vermeiden. Daher bleibt während des Anpreßvorgangs der Schmelzklebstoff ausreichend dünnflüssig, um eine hohe Qualität der beschichteten Schmalfläche zu gewährleisten.

Erfindungsgemäß wird ein gleichmäßig hoher Andruck von Teilabschnitten des Profils erreicht, ohne daß der verwendete Klebstoff, insbesondere der Schmelzklebstoff, durch die Andruckelemente zusammengeschoben wird. Durch die sich allmählich vergrößernde Andruckfläche wird die bei bekannten Verfahren beobachtete Oberflächenunruhe vermieden. Durch den auf nur einen Teilbereich der Schmalfläche wirkenden Andruck tritt eine sehr gute mechanische Verankerung des Belags mit dem Plattenelement ein. Ein Vorteil liegt auch in der hohen Profiltreue ohne die bei üblichen Verfahren bei unsachgemäßer Einstellung der Gleitschuhe auftretenden Längskanten.

Zusätzlich erreicht man einen weiteren Vorteil. Die geraden oder profilierten Schmalflächen der Plattenelemente werden mit Fräswerkzeugen hergestellt, die von Zeit zu Zeit nachgeschärft werden müssen. Profilabweichungen, die durch das Nachschärfen der Fräswerkzeuge entstehen können, werden im erfindungsgemäßen Verfahren überbrückt, ohne daß die üblicherweise auftretenden Probleme mit dem Anhaften des Bandes an der Schmalfläche entstehen.

Wichtig ist auch die erfindungsgemäß erreichte Möglichkeit einer sehr hohen Verarbeitungsgeschwindigkeit, die bis zu 80 m/min betragen kann, wobei keine Qualitätseinbußen eintreten.

In einer besonders bevorzugten Ausgestaltung der Erfindung wird vorgeschlagen, daß die Andruckfläche im wesentlichen der geometrischen Form der Schmalfläche des Plattenelements angepaßt ist und daß die Änderung des Kontaktbereichs in Längsrichtung durch Abtrennen eines oberen Bereichs des Gleitschuhs bewirkt wird, wobei die Trennfläche in Längsrichtung schräg verläuft. Dabei kann die Schmalfläche eine beliebige geometrische Form aufweisen. Sehr häufig hat die Schmalfläche die Querschnittsform eines Halbkreises, im Falle nur einer abgerundeten Kante eines Viertelkreises oder eines anderen Teilkreises. Aber auch kompliziertere Querschnittsformen, z. B. eine S-Form der Schmalfläche, können mit dem erfindungsgemäßen Gleitschuh beschichtet werden.

Der Bereich des Gleitschuhs, in den die schrägverlaufende Trennfläche besonders tief einschneidet, bildet die Einlaufzone des Gleitschuhs. Mit dem derart ausgestalteten Gleitschuh wird der bandförmige Belag daher zunächst mit dem tiefsten Bereich des profilierten Gleitschuhs angepreßt. Dieser Bereich entspricht dem am meisten nach außen vorstehenden Bereich der Schmalfläche. Danach werden die anderen Teilbereiche der Schmalfläche angepreßt, bis schließlich die Auslaufzone des Gleitschuhs, in die die schrägverlaufende Trennfläche nur wenig einschneidet, die am stärksten zurückweichenden Bereiche der profilierten Schmalfläche anpreßt.

Um den beschriebenen Effekt besonders ausgeprägt zu erreichen, wird weiterhin vorgeschlagen, daß die Trennfläche im Bereich der Einlaufzone zumindest so tief wie der tiefste Punkt der Einlaufzone verläuft und insbesondere diesen tiefsten Punkt tangential berührt.

Die genannte Trennfläche kann eine gekrümmte Fläche sein. Bevorzugt ist es jedoch, daß die Trennfläche eine ebene Fläche ist. Die geometrische Form der Trennfläche beeinflußt die Zeitdauer, mit der die einzelnen Flächenelemente des bandförmigen Belages an die Schmalfläche angepreßt werden. Durch eine entsprechende Wahl dieser Trennfläche lassen sich daher bestimmte Effekte erzielen, die von der Anpreßdauer an den bestimmten Bereichen der Schmalfläche abhängen. Im Fall der ebenen Trennfläche werden alle Bereiche der Schmalfläche mit der gleichen Anpreßdauer angedrückt.

Die meisten profilierten Schmalflächen haben einen teilkreisförmigen Querschnitt. Daher wird in einer weiteren Ausgestaltung der Erfindung vorgeschlagen, daß die Oberseite des Gleitschuhs im Querschnitt und zumindest im mittleren Bereich des Querschnitts teilkreisförmig ausgebildet ist.

Im Falle eines spiegelsymmetrischen Querschnittsprofils der Schmalfläche hat es sich als besonders günstig im Hinblick auf eine wirtschaftliche Durchführbarkeit und eine hohe Qualität der beschichteten Kante herausgestellt, wenn man den bandförmigen Belag zunächst an einen Längsstreifen der Schmalfläche anpreßt, der von den Rändern der Schmalfläche etwa gleich weit entfernt ist. Dieser Längsstreifen bildet also die Mitte der Schmalfläche.

Im Falle eines Querschnittsprofils der Schmalfläche ohne Spiegelsymmetrie, z. B. eines S-Profils, ist es dagegen aus den genannten Gründen günstig, wenn man den bandförmigen Belag zunächst an den am weitesten nach außen vorstehenden Längsstreifen der Schmalfläche anpreßt. Ein anderes Beispiel für ein derartiges unsymmetrisches Querschnittsprofil wäre eine Rundung nach Art eines Viertelrundstabs, wobei die eine Fläche des Plattenelementes abgerundet ist und die andere Fläche eine Kante aufweist.

Insbesondere für das weiter unten genannte Anpressen der überstehenden Kanten des bandförmigen Belages und für eine hohe Qualität des Hauptbereich der beschichteten Schmalfläche ist es bei ein- oder zweiseitig beschichteten Plattenelementen von Vorteil, wenn man den bandförmigen Belag zunächst nur an einen Längsstreifen der Schmalfläche anpreßt, welcher von den Rändern der beschichteten Flächen des zweiseitig beschichteten Plattenelements bzw. von dem Rand der beschichteten Fläche des einseitig beschichteten Plattenelements am weitesten entfernt ist, und daß man danach den Kontaktbereich, ausgehend von dem genannten Längsstreifen, ausweitet, bis der bandförmige Belag im gesamten Bereich von diesem Längsstreifen bis zu den Rändern der beschichteten Flächen bzw. bis zum Rand der beschichteten Fläche des Plattenelements angepreßt worden ist.

Aus diesen Gründen wird im Falle der Bearbeitung von Plattenelementen mit zwei abgerundeten Grenzkanten zwischen der Schmalfläche und der Ober- und Unterseite des Plattenelements vorgeschlagen, daß die Andruckfläche des Gleitschuhs derart ausgebildet ist, so daß in der Einlaufzone der mittlere Bereich der Schmalfläche angepreßt wird.

Im Falle der Bearbeitung von Plattenelementen mit nur einer abgerundeten Grenzkante wird dagegen vorgeschlagen, daß die Andruckfläche des Gleitschuhs derart ausgebildet ist, so daß in der Einlaufzone der von der abgerundeten Grenzkante am weitesten entfernte Bereich der Schmalfäche angepreßt wird.

Nach dem Ankleben des Belages an die Schmalfläche ist es günstig, den Belag zu kühlen, um den Schmelzklebstoff zu verfestigen und auf diese Weise den mit dem Gleitschuh erreichten Zustand zu fixieren. Die Kühlung kann mit einem nachgeschalteten gekühlten Gleitschuh oder auch mit dem erfindungsgemäßen Gleitschuh vorgenommen werden, der auf diese Weise mit entsprechenden Kühlkanälen und sonstigen Kühleinrichtungen zu versehen ist. Die Kühlung von Gleitschuhen ist einerseits im Stand der Technik, z. B. in der DE 37 40 964 A1 beschrieben. Eine besonders vorteilhafte Kühlung von Gleitschuhen bzw. des Schmelzklebstoffes wird weiter unten noch im einzelnen erläutert.

Nach dem Ankleben und eventuellen Kühlen des Belages wird der Überstand des Belages über die Schmalfläche mit einem Ziehmesser abgeschnitten bzw. mit einem Fräswerkzeug entfernt.

Der größte Teil aller profilierten Schmalflächen ist mit einer Rundung, bekannt als Halbrundstab bzw. Viertelrundstab, versehen. Die Rundungen können je nach Gestaltung verschiedene Durchmesser besitzen. Vorwiegend wird mit einem Halbrundstab mit Radius von 10 bis 25 mm gearbeitet.

Mit dem erfindungsgemäßen Gleitschuh können auch ebene Schmalflächen mit einem dünnen bandförmigen Belag beschichtet werden, die eine oder zwei stark abgerundete Kanten aufweisen. Dazu wird vorgeschlagen, daß man einen bandförmigen Belag an eine Schmalfläche eines ein- oder zweiseitig beschichteten Plattenelements anleimt, wobei die Grenzkante zwischen der Schmalfläche und mindestens einer beschichteten Seite des Plattenelements abgerundet ist und der Krümmungsradius der abgerundeten Grenzkante bis 10 mm und insbesondere 1 mm bis 5 mm beträgt, und daß man den bandförmigen Belag sowohl an der Schmalfläche als auch an dessen Grenzkante(n) anpreßt und gleichzeitig kühlt. Im Gegensatz zum Stand der Technik sind hier sehr viel weniger Verfahrensschritte notwendig. Der eingesetzte Kunststoffanteil ist erheblich geringer. Probleme bei der Entsorgung von Kunststoffabfall sowie von Plattenelementen und von damit hergestellten Möbelstücken treten nicht mehr auf.

Hier geht man also von einem Plattenelement aus, dessen Grenzkanten entsprechend der gewünschten Abrundung angefräst sind. Die Schmalflächen einschließlich ihrer gerundeten Grenzkanten werden dann mit einem sehr dünnen bandförmigen Belag beschichtet, welcher in üblicher Weise aus Melamin, Polyester, PP, PVC und/oder Furnier besteht. Dieser bandförmige Belag wird mit der genannten bevorzugten Andrucktechnik, insbesondere unter Einsatz von Schmelzklebstoffen, auf die Schmalfläche aufgebracht.

Versuche haben gezeigt, daß auf diese Weise sogar Schmalflächen beschichtet werden können, deren abgerundete Grenzkanten den sehr niedrigen Krümmungsradius von nur 1 mm aufweisen. Das Beschichten solcher Schmalflächen mit den üblichen dünnen Belägen (Dünnkanten) war bisher nicht möglich, weil nach dem Umbiegen des relativ steifen und elastischen Kantenmaterials hohe Rückstellkräfte auftreten, die bei dem weichen, noch nicht verfestigten Schmelzklebstoff zu einem Rückfedern der Belagkanten geführt haben. Dabei löste sich auch oft der Belag im mittleren Bereich der Schmalfläche.

Mit dem erfindungsgemäßen Gleitschuh lassen sich aufgrund des hohen linienförmig aufgebrachten Drucks derartige Schmalflächen mit abgerundeten Grenzkanten dennoch beschichten. Dabei sollte gleichzeitig mit dem Anpressen des Belages dieser bzw. der Schmelzklebstoff gekühlt werden, so daß schon während des Anpressens eine Klebefestigkeit erreicht wird, die die Rückstellkräfte übersteigt. Die notwendige Stärke der Kühlung hängt vom Krümmungsradius der abgerundeten Grenzkante, vom Material und der Dicke des bandförmigen Belages und vom eingesetzten Klebstoff ab und kann vom: Fachmann leicht durch entsprechende Versuche herausgefunden werden.

Um ein nachträgliches Ablösen des extrem verformten dünnen Belages zu verhindern, ist es außerdem wichtig, daß nicht nur der beschichtete abgerundete Teil der Schmalflächen, sondern auch sein Hauptbereich angepreßt und gleichzeitig gekühlt wird, so daß der Schmelzklebstoff nach dem Anpressen soweit abgekühlt und verfestigt ist, um den Rückstellkräften des verformten Belages widerstehen zu können.

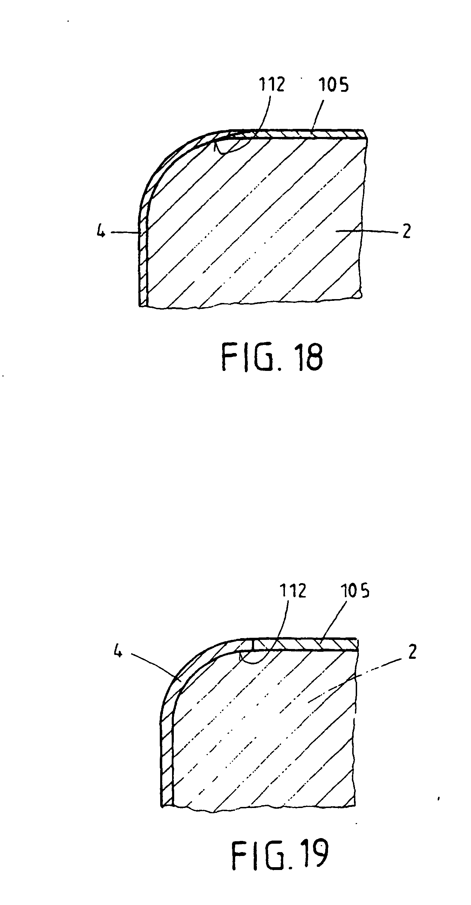

Hier wie auch bei den weiter oben genannten Ausgestaltungen der Erfindung kann ein unterschiedlicher Übergang des bandförmigen Belages zur Beschichtung der Hauptfläche des Plattenelementes vorgesehen sein. So kann der Belag in der Hauptfläche des Plattenelementes auslaufen, wie es in Figur 18 dargestellt ist, oder die Kante des bandförmigen Materials kann "eingelegt" sein (Figur 19).

Wenn man mit der Auslaufzone des Gleitschuhs den Belag nur im Bereich der abgerundeten Grenzkante(n) anpreßt und insbesondere gleichzeitig kühlt, wird ein sehr hoher und gleichmäßiger Druck während der Abkühlphase im Bereich der abgerundeten Grenzkante bei gleichzeitiger Abkühlung aufgebracht, so daß beim Übergang von dem bandförmigen Belag zur Beschichtung der Hauptfläche des Plattenelementes keine Schmelzklebstoffuge erkennbar ist.

Die genannte Beschichtung von Schmalflächen mit abgerundeten Grenzkanten läßt sich mit Vorteil insbesondere bei Schmalflächen einsetzen, welche bis auf die abgerundeten Grenzkanten im wesentlichen eben sind. Es ist aber auch durchaus möglich, daß die Schmalflächen in ihrem Hauptbereich eine Profilierung aufweisen.

Zur Vermeidung von Verschmutzungen der Andruckfläche sowie des Kantenmaterials ist es außerdem bevorzugt, wenn die Einlaufzone des Gleitschuhs in Längsrichtung abgerundet ist. Zum gleichen Zweck wird außerdem vorgeschlagen, daß die Einlaufzone des Gleitschuhs in Querrichtung abgerundet ist.

Weiterhin wird vorgeschlagen, daß man beim Anpressen des bandförmigen Belages diesen in der Auslaufzone der Gleitschuhe stärker als in der Einlaufzone andrückt. Damit wird ein schonendes Anpressen des bandförmigen Belages erreicht. Es wird vermieden, daß der in der Einlaufzone besonders heiße und damit dünnflüssige Schmelzklebstoff an den Seiten der Schmalfläche herausgequetscht wird. Dieser unterschiedliche Anpreßdruck kann z. B. erreicht werden, wenn an der Rückseite des Gleitschuhs jeweils eine auf die Einlaufzone und eine auf die Auslaufzone wirkende Druckfeder vorgesehen ist und die Druckfeder der Einlaufzone eine schwächere Federkraft aufweist.

Um, wie bereits vorstehend ausgeführt worden ist, einen besonders hohen Anpreßdruck des Belages im Bereich der Grenzkanten zu erreichen, wird außerdem vorgeschlagen, daß der Gleitschuh im Bereich seiner Auslaufzone eine derartige Andruckfläche hat, so daß der Belag nur im Bereich der Grenzkante(n) angepreßt wird. Von Vorteil ist außerdem eine im Bereich der Auslaufzone wirkende Kühleinrichtung des Gleitschuhs.

Zur Vermeidung von in Längsrichtung verlaufenden Kanten, insbesondere im Falle einer abgerundeten Schmalfläche, wird außerdem ein System von Andruckelementen für eine Kantenanleimmaschine zum Andrücken eines mit Klebstoff beschichteten bandförmigen Belages an eine im Querschnitt gerade oder gekrümmte Schmalfläche eines Plattenelementes, insbesondere einer Span-, Faser- oder Massivholzplatte, vorgeschlagen, welches dadurch gekennzeichnet ist, dass mehrere hintereinander angeordnete Andruckelemente vorgesehen sind, die derart an das Profil der Schmalfläche angepasst sind, so dass das den Belag als erstes anpressende Andruckelement eine Andruckfläche hat, die den Belag nur an einen Längsstreifen der Schmalfläche anpresst und dass das bzw. die nachfolgenden Andruckelemente als Gleitschuh im der Sinne der Erfindung ausgebildet ist/sind, die jeweils eine Andruckfläche mit einem Kontaktbereich haben, der, ausgehend vom Kontaktbereich des vorherigen Andruckelementes, ausgeweitet ist und vorzugsweise den Kontaktbereich des vorausgegangenen Andruckelementes einschließt.

Vorgeschlagen wird außerdem, daß das erste Andruckelement als eine drehbare Andruckrolle und die nachfolgenden Andruckelemente als Gleitschuhe ausgebildet sind.

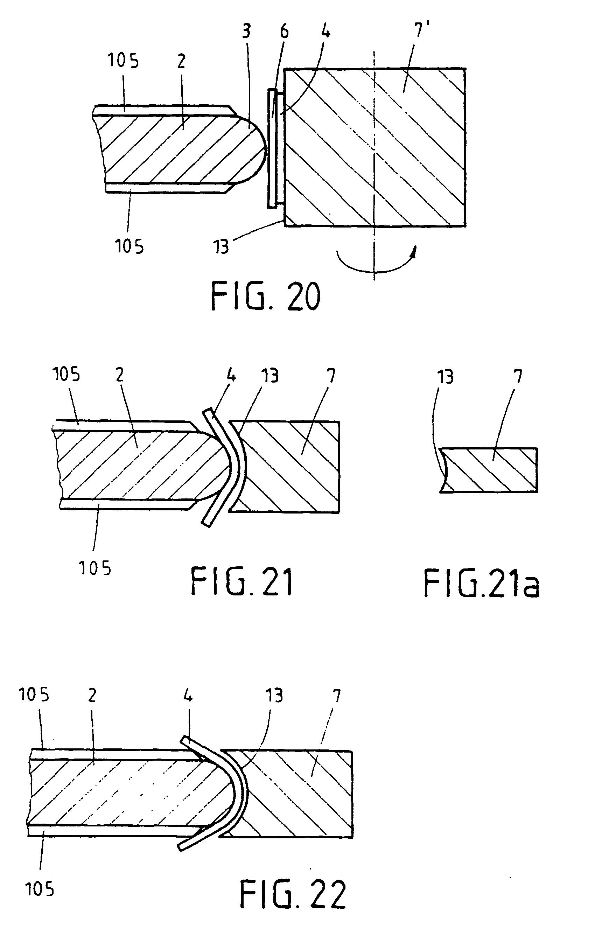

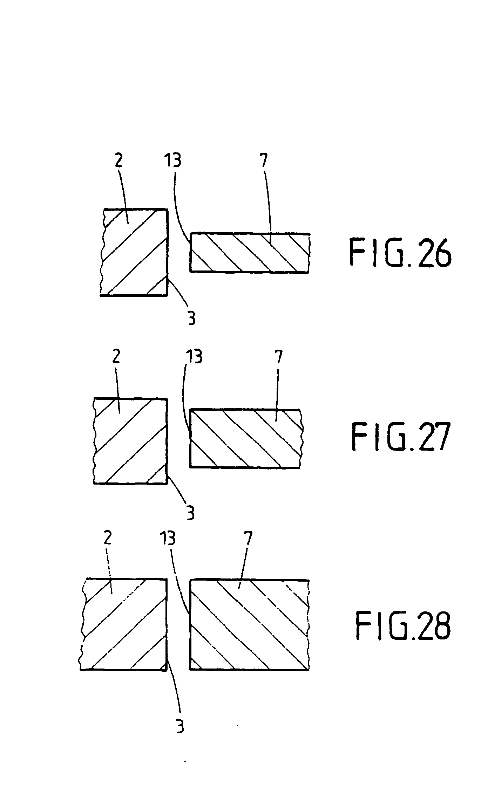

Im Rahmen der Erfindung liegt es, wenn man den Kontaktbereich, ausgehend von dem genannten Längsstreifen, immer weiter vergrößert, wobei die bisherigen Kontaktbereiche ebenfalls angepreßt werden. Diese Ausgestaltung ist bevorzugt. Es liegt aber ebenfalls im Rahmen der Erfindung, wenn man zunächst nur den Längsstreifen anpreßt und dann den Kontaktbereich derart ausweitet, so daß die früheren Kontaktbereiche nicht mehr angepreßt werden. Beispiele für die erste Ausgestaltung finden sich in den Figuren 20 bis 23 und in den Figuren 26 bis 28.

Für die Schmalflächen mit einem teilkreisförmigen, insbesondere halbkreisförmigen Querschnittsprofil wird in einer weiteren vorteilhaften Ausgestaltung der Erfindung vorgeschlagen, daß die Andruckflächen der Gleitschuhe ebenfalls teilkreisförmig ausgebildet sind, wobei die nachfolgenden Gleitschuhe Andruckflächen mit kleineren Krümmungsradien als die vorhergehenden Gleitschuhe haben.

Zur Vermeidung von Verschmutzungen der Andruckflächen sowie des Kantenmaterials ist es außerdem bevorzugt, wenn die Einlaufzone der Gleitschuhe in Längsrichtung abgerundet ist. Zum gleichen Zweck wird außerdem vorgeschlagen, daß die Einlaufzone der Gleitschuhe in Querrichtung abgerundet ist.

Die Gleitschuhe werden üblicherweise mit geeigneten Mitteln, z. B. Druckfedern, an den Belag angepreßt. Eine besonders gleichmäßige Beschichtung der Schmalfläche wird erreicht, wenn die Einlaufzone der Andruckfläche mit geringerem Druck als die Auslaufzone an den Belag angepreßt wird.

Vorgeschlagen wird außerdem, daß zumindest das zuletzt eingesetzte Andruckelement eine Einrichtung zum Kühlen des bandförmigen Belages und/oder des auf diesem aufgebrachten Klebstoffs aufweist. Werden, wie es bevorzugt ist, mehrere hintereinander angeordnete Andruckelemente eingesetzt, so ist es nämlich günstig, wenn der Schmelzklebstoff zunächst weich bleibt, so daß sich eventuelle, beim Anpressen entstehende Spannungen ausgleichen können, damit eine besonders glatte und gleichmäßige Oberfläche des bandförmigen Belages erreicht wird. Das zuletzt eingesetzte Andruckelement sollte allerdings eine ausreichend starke Kühlung ermöglichen, die den Schmelzklebstoff soweit verfestigt, so daß ein Verschieben oder ein Ablösen des bandförmigen Belages auf bzw. von der Schmalfläche nicht mehr möglich ist. Eine separate Kühleinrichtung ist nicht notwendig, da diese Kühleinrichtung bereits im Andruckelement integriert ist.

Sollen Schmalflächen mit abgerundeten Grenzkanten beschichtet werden, so wird in einer weiteren besonders vorteilhaften Ausgestaltung der Erfindung vorgeschlagen, daß die Andruckfläche des dem ersten Andruckelement folgenden Gleitschuhs der Schmalfläche des Plattenelements einschließlich der abgerundeten Grenzkante(n) angepaßt ist und eine Einrichtung zum Kühlen des bandförmigen Belages und/oder des auf diesem aufgebrachten Klebstoffs aufweist. Mit einem solchen Andruckelement wird ein Anpressen auf der gesamten Fläche der Schmalfläche und auch auf den abgerundeten Grenzkanten bei gleichzeitiger Kühlung erreicht, so daß der bandförmige Belag an seinen kanten gleichzeitig umgebogen und ausreichend stark an den Grenzkanten fixiert wird, so daß die von dem steifen Belag ausgehenden Rückstellkräfte den Belag nicht mehr abzulösen vermögen.

Wenn zweiseitig beschichtete Plattenelemente bearbeitet werden sollen, ist es besonders günstig, wenn der dem ersten Andruckelement folgende Gleitschuh in Längsrichtung zweigeteilt ist, so daß der eine Teil nur auf die eine Grenzkante und den daran anschließenden Teil der Schmalfläche und der andere Teil des Gleitschuhs nur auf die andere Grenzkante und den restlichen Teil der Schmalfläche angepreßt wird. Hiermit erreicht man ein stärkeres Anpressen im Bereich der Grenzkanten. Zu diesem Zweck wird insbesondere vorschlagen, daß die Teile des zweigeteilten Gleitschuhs von einer Andruckkraft beaufschlagt werden, deren Richtung in einem Winkel von 40° bis 50° zur Ebene des Plattenelements und zur Schmalfläche liegt. Der auf diese Weise ausgeübte verstärkte Druck auf die abgerundete Grenzkante ist besonders vorteilhaft, da hier die relativ hohen Rückstellkräfte des Belages auftreten, die den Belag von den abgerundeten Kanten abzulösen versuchen.

Werden Plattenelemente mit nur einer abgerundeten Grenzkante bearbeitet, so ist es günstig, wenn nur ein Teil des zweigeteilten Gleitschuhs vorgesehen ist.

Eine besondere schmale und optisch kaum erkennbare Schmelzklebstoffuge beim Übergang vom bandförmigen Belag zur Beschichtung der Hauptfläche des Plattenelementes wird erreicht, wenn der zuletzt eingesetzte Gleitschuh eine derartige Andruckfläche hat, so daß der Belag nur im Bereich der Grenzkante(n) angepreßt wird, und wenn dieser Gleitschuh eine Einrichtung zum Kühlen des Belages und/oder des auf ihm aufgebrachten Klebstoffs aufweist. Hiermit wird ein besonders starker Anpreßdruck im Übergangsbereich von dem bandförmigen Belag zur Beschichtung der Hauptfläche des Plattenelementes bei gleichzeitiger Verfestigung des Schmelzklebstoffes erreicht.

Zu diesem Zweck hat es sich außerdem als besonders vorteilhaft erwiesen, wenn die Andruckfläche im wesentlichen aus zwei ebenen, im Winkel von 45° bis 60° zueinander liegenden ebenen Flächen besteht.

Eine spezielle vorteilhafte Ausgestaltung der im Andruckelement vorgesehenen Kühleinrichtung sieht vor, daß die Einrichtung aus mindestens einem Kühlkanal innerhalb des Andruckelementes besteht und der Kühlkanal an ein Kühlfluid, insbesondere Preßluft, anschließbar ist und mindestens eine Auslaßöffnung an der Andruckfläche des Andruckelementes hat. Der Belag bzw. der auf dem Belag aufgetragene Schmelzklebstoff wird auf zweierlei Weise gekühlt Zum einen strömt die Luft zwischen der Andruckfläche und der Außenfläche des Belages nach außen. Zum anderen setzt das Kühlfluid die Temperatur des Andruckelementes und damit seiner Andruckfläche herab, so daß die gesamte Andruckfläche als Kühlelement dient.

Für eine besonders effektive Kühlung hat es sich als vorteilhaft herausgestellt, wenn die Länge der eine Einrichtung zum Kühlen aufweisenden Gleitschuhe größer als die Länge der Gleitschuhe ohne eine solche Einrichtung ist und insbesondere etwa 300 mm beträgt. Die Gleitschuhe ohne Kühlung können beispielsweise eine Länge von 60 mm haben. Durch die besonders große Länge der kühlenden Gleitschuhe wird die Wärmeübertragung vom Belag auf den Gleitschuh verbessert.

Mit den erfindungsgemäßen Andruckelementen oder Systemen von Andruckelementen lassen sich nach dem erfindungsgemäßen Verfahren Plattenelemente herstellen, deren Hauptflächen ein- oder zweiseitig beschichtet sind und deren mindestens eine Schmalfläche mit einem bandförmigen Belag beschichtet ist, wobei die Grenzkante(n) zwischen der Schmalfläche und mindestens einer beschichteten Hauptfläche des Plattenelementes mit einem Krümmungsradius bis 10 mm und insbesondere von 1 mm bis 5 mm abgerundet ist / sind.

Dabei weist der bandförmige Belag eine Dicke bis 0,3 mm auf, vorzugsweise ist die Dicke 0,15 bis 0,3 und ganz besonders bevorzugt 0,15 bis 0,2 mm.

Wenn bandförmige, auf der Basis von Papier aufgebaute Beläge mit einer auslaufenden Kante an die Schmalfläche eines Plattenelements angeklebt sind, dunkelt der Randbereich zwischen dem bandförmigen Belag und der beschichteten Hauptfläche beim Anwender nach. Da der Randbereich der auslaufenden Kante (Figur 18) aus einem Schnitt quer durch den bandförmigen Belag besteht, saugt sich das papierhaltige Material beim feuchten Abwischen voll und nimmt dabei Schmutzteilchen auf, die nicht oder nur sehr schwer wieder entfernt werden können. Zur Lösung dieses Problems wird vorgeschlagen, daß der bandförmige Belag aus einem thermoplastischen Material, insbesondere aus einem Pfropf-Copolymer von Polypropylen besteht. Dieses, auf der Basis von Polypropylen aufgebaute, an sich aus dem Stand der Technik bekannte Material ist durch Pfropf-Copolymerisation derart modifiziert, so daß es im Gegensatz zu Polypropylen problemlos an die Schmalfläche angeklebt werden kann.

Die Erfindung betrifft auch eine Vorrichtung zum Anleimen des bandförmigen Belages mit mindestens einem Andruckelement in Form eines Gleitschuhs. Das Andruckelement weist Kühlkanäle mit mindestens einem Einlaß und mindestens einem Auslaß für das Kühlmedium auf.

Derartige Gleitschuhe mit Kühlmittelkanälen sind aus der DE 37 40 964 A1 bekannt und werden in diesem Dokument Glätt-Kühlschuhe genannt. Sie werden in den bekannten Kantenanleimmaschinen verwendet und pressen den bandförmigen Belag mit rückseitig angeordneten Druckfedern an die Schmalfläche des Plattenelementes an. In der Regel werden mehrere hintereinander angeordnete Gleitschuhe verwendet, wobei nur der zuletzt eingesetzte Gleitschuh gekühlt ist, um den Schmelzklebstoff zwischen dem angeleimten Belag und der Schmalfläche des Plattenelementes abzukühlen und zu verfestigen und auf diese Weise eine hohe Verarbeitungsgeschwindigkeit ohne Qualitätseinbußen zu ermöglichen.

Bei bekannten gekühlten Gleitschuhen sind mehrere Auslaßöffnungen an der Andruckfläche vorgesehen. Da diese Öffnungen beim Anpressen des bandförmigen Belages durch diesen verschlossen werden, strömt das Kühlmedium im wesentlichen nur im Zeitraum zwischen zwei Bearbeitungsvorgängen aus den Auslässen. Die Kühlung des Schmelzklebstoffes erfolgt über die Andruckfläche des Gleitschuhs und ausschließlich von der Dekorseite des bandförmigen Belages her. Ein gewisser zusätzlicher Kühleffekt wird durch die unbeschichtete Schmalfläche erreicht, welche sich auf etwa Raumtemperatur befindet. Auf diese Weise wird eine zufriedenstellende Abkühlung und damit Verfestigung des Schmelzklebstoffes nur im angeklebten Bereich, nicht aber am Überstand des bandförmigen Belages erreicht, wo der Schmelzklebstoff klebrig bleibt.

Um ein Verschmieren des Randes der beschichteten Breitfläche des Plattenelements zu vermeiden, ohne daß dadurch die Arbeitsgeschwindigkeit begrenzt wird, wird vorgeschlagen, daß eine Leitung für das Kühlmedium an den Auslaß angeschlossen ist und der Auslaß der Leitung derart angeordnet ist, so daß das aus der Leitung strömende Kühlmedium im Betrieb auf den Überstand des bandförmigen Belages und insbesondere auf die Rückseite des Überstandes gerichtet ist.

Auf diese Weise wird auch der am Überstand haftende Schmelzklebstoff ausreichend abgekühlt und verfestigt, so daß beim nachfolgenden Abtrennen des Überstandes keine Verschmierung der Fräsaggregate oder Ziehklingen sowie des Randes der Beschichtung der Breitflächen erfolgt. Für diese Abkühlung ist keine zusätzliche Kühleinrichtung und keine zusätzliche Menge an Kühlmedium erforderlich. Es reicht aus, ein erfindungsgemäß modifiziertes Andruckelement einzusetzen. Hier übt das Kühlmedium seine Wirkung zunächst in an sich bekannter Weise auf die Andruckfläche des Andruckelementes aus und kühlt anschließend den Schmelzklebstoff am Überstand des bandförmigen Belages.

Der eingesetzte Gleitschuh besteht vorzugsweise aus einem Material mit einer hohen Wärmeleitfähigkeit. In der Praxis hat sich dabei Stahl bewährt.

Werden, wie es häufig vorkommt, die Kanten von beidseitig beschichteten Plattenelementen mit einem bandförmigen Belag versehen, so zeigt der Belag sowohl an seinem unteren wie auch an seinem oberen Rand einen Überstand, der nach dem vollflächigen Anleimen des Belages abgetrennt wird. Für diesen Fall ist es bevorzugt, daß mindestens zwei Leitungen vorgesehen sind, von denen die eine mit ihrem Auslaß auf den oberen Überstand des Belages und die andere mit ihrem Auslaß auf den unteren Überstand gerichtet ist, und diese Auslässe insbesondere auf die Rückseiten der Überstände gerichtet sind. Während des Anpressens und Kühlens des Belages mit dem letzten Andruckelement können auf diese Weise die Überstände und damit der an den Überständen haftende Schmelzklebstoff ausreichend abgekühlt werden, so daß ein schmierfreies Abtrennen der Überstände möglich ist.

In einer besonders bevorzugten Ausgestaltung der Erfindung wird vorgeschlagen, daß das Andruckelement eine Einlaufzone und eine Auslaufzone aufweist und der Auslaß der Leitung zur Einlaufzone hin gerichtet ist. Damit wird erreicht, daß das aus dem Auslaß strömende Kühlmedium entgegen der Vorschubrichtung des zu beschichtenden Plattenelementes geblasen wird, so daß das Kühlmedium möglichst lange an der Oberfläche des Schmelzklebstoffes am Überstand wirksam wird.

Vorgeschlagen wird weiterhin, daß der Auslaß der Leitung schräg auf die Mittelachse der Andruckfläche des Andruckelements hin gerichtet ist. Beim Einsatz der erfindungsgemäßen Vorrichtung wird so das kühlende Gas gezielt auf den Grenzbereich zwischen dem Überstand und dem Plattenelement geblasen.

Eine in sich stabile Leitung für das Kühlgas, welche keine zusätzlichen Halterungen erfordert, ist möglich, wenn die Leitung aus einem Metallrohr, z. B. aus einem Kupferrohr, besteht. Im Hinblick auf die angestrebte hohe Verarbeitungsgeschwindigkeit ist eine Beschädigung des Plattenelementes durch das Leitungsende ausgeschlossen, wenn der Auslaß der Leitung aus Kunststoff besteht. Auch wenn der Auslaß der Leitung, welche keine zusätzliche Halterung oder Befestigung aufweist, das beschichtete Plattenelement berühren sollte, führt dies nicht zu Kratzern oder sonstigen Schäden. Eine hohe Betriebssicherheit wird auf diese Weise erreicht, obwohl die Leitung für das Kühlgas nicht zusätzlich in ihrer Lage gesichert ist.

Zur zusätzlichen Kühlung des Schmelzklebstoffes im angeklebten Bereich ist mindestens ein Auslaß der Kühlkanäle an der Andruckfläche des Andruckelementes von Vorteil. Damit das kühlende Gas noch besser zwischen dem Andruckelement und dem angeklebten bandförmigen Belag strömen kann, wird außerdem vorgeschlagen, daß der Auslaß in mindestens eine in der Andruckfläche liegende Nut übergeht. Das Kühlgas strömt also aus dem Auslaß durch die Nut innerhalb der Andruckfläche, so daß der bandförmige Belag nicht nur vom gekühlten Andruckelement, sondern auch unmittelbar vom Kühlgas abgekühlt wird. Vorzugsweise liegen dabei diese Nuten senkrecht oder schräg zur Vorschubrichtung des Plattenelementes, damit der bandförmige Belag über seine gesamte, an der Schmalfläche angeklebte Breite vom Kühlgas erreicht wird.

### Mit dem erfindungsgemäßen Andruckelement zu verarbeitende bandförmige Beläge, Plattenelemente und Klebstoffe

Vorzugsweise hat der in einem der erfindungsgemäßen Verfahrensvarianten eingesetzte bandförmige Belag eine Dicke von 0,15 bis 0,2 mm.

Das erfindungsgemäße Verfahren läßt sich außerdem besonders gut einsetzen, wenn das Plattenelement eine Dicke von 15 bis 32 mm aufweist.

Mit dem erfindungsgemäßen Gleitschuh lassen sich sämtliche üblichen Plattenelemente bearbeiten. Als mögliche Plattenelemente seien Spanplatten, aber auch andere Platten wie Tischlerplatten, Sperrholzplatten, sogenannte MDF-Platten (mitteldichte Faserplatten) und Massivholzplatten genannt.

Auch die Auswahl der einzusetzenden Beläge (Kantenmaterialien) ist nicht kritisch. So sind Kantenmaterialien aus Melamin, Polyester, PVC, ABS, Polypropylen und Furniere geeignet. Auch die heutzutage verstärkt eingesetzten relativ dünnen Kantenmaterialien aus Dekorpapieren, die auf Papierbasis aufgebaut und mit farbigen Kunststoffen getränkt sind, lassen sich problemlos verarbeiten.

Die Wahl des einzusetzenden Klebstoffs im erfindungsgemäßen Verfahren ist ebenfalls nicht kritisch. Vorzugsweise werden Schmelzklebstoffe eingesetzt.

Zum Beispiel können Schmelzklebstoffe verwendet werden, die hergestellt worden sind aus Polymeren und Copolymeren von synthetischen Harzen, Kautschuken, Polyethylen, Polypropylen, Polyurethan, Acryl, Vinyl-Acetat, Ethylenvinylacetat und Polyvinylalkohol.

Spezielle Beispiele umfassen Schmelzklebstoffe, die aus folgenden Komponenten hergestellt sind:
1) Elastische Polymere wie Block-Copolymere, z. B. Styrol-Butadien, Styrol-Butadien-Styrol, Styrol-Isopren-Styrol, Styrol-Ethylen-Butylen-Styroi, Styrol-Ethylen-Propylen-Styrol;
2) Ethylen-Vinyl-Acetat-Polymere, andere Ethylen-Ester und Copolymere, z. B. Ethylen-Methacrylat, Ethylen-n-Butyl-Acrylat und Ethylen-Acrylsäure;
3) Polyolefine wie Polyethylen und Polypropylen;
4) Polyvinylacetat und Copolymere damit;
5) Polyacrylate;
6) Polyamide;
7) Polyester;
8) Polyvinylalkohole und Copolymere damit;
9) Polyurethane;
10) Polystyrole;
11) Polyepoxide;
12) Copolymere von Vinyl-Monomeren und Polyalkylenoxid-Polymeren;
13) Aldehyde, die Harze enthalten wie Phenol-Aldehyd, Urea-Aldehyd, Melamin-Aldehyd und dergleichen.

Weiter können Komponenten zur Verstärkung der Adhäsion, Verdünnungsmittel, Stabilisatoren, Antioxidantien, Farb- und Füllstoffe enthalten sein.

Als Komponenten zur Verbesserung der Adhäsion seien beispielhaft genannt:
1) Natürliche und modifizierte Harze,
2) Polyterpen-Harze,
3) phenolisch modifizierte Kohlenwasserstoff-Harze,
4) aliphatische und aromatische Kohlenwasserstoff-Harze,
5) Phthalat-Ester und
6) hydrierte Kohlenwasserstoffe, hydrierte Harze und hydrierte Harz-Ester.

Als Verdünnungsmittel seien beispielhaft flüssiges Polybuten oder Polypropylen, Petroleumwachse wie Paraffin und mikrokristalline Wachse, halbflüssiges Polyethylen, hydrierte tierische, Fisch- und pflanzliche Fette, Mineralöl und synthetische Wachse sowie Kohlenwasserstoff-Öle genannt.

Beispiele für die anderen Additive finden sich in der Literatur.

### Das erfindungsgemäße Verfahren

Die Erfindung betrifft auch ein Verfahren zum Anleimen eines bandförmigen Belags an eine Schmalfläche (Kante) eines Plattenelements, insbesondere einer Span-, Faser- oder Massivholzplatte, wobei man den Belag mit mindestens einem Andruckelement an die Schmalfläche anpreßt.

Die bereits genannte erfindungsgemäße Aufgabe wird hier dadurch gelöst, daß das Andruckelement als oben genannter erfindungsgemäßer Gleitschuh ausgebildet ist und daß der linienartige Kontaktbereich im Winkel zur Längsrichtung der Schmalfläche oder an der Grenzkante zwischen Schmalfläche und Breitfläche des Plattenelements angeordnet wird. Dabei kann der Winkel 90° betragen, so daß der linienartige Kontaktbereich senkrecht zur Längsrichtung der Schmälfläche liegt.

Bevorzugt ist jedoch eine schräge Ausrichtung des Kontaktbereiches. Daher wird weiterhin vorgeschlagen, daß der genannte Winkel kleiner als 90° ist. Besonders bevorzugt ist es, wenn der Winkel etwa bei 45° liegt.

Von Vorteil ist es außerdem, wenn das mit dem Gleitschuh bewirkte Glätten des bandförmigen Belages über die gesamte Breite des Belages erfolgt. Vorzugsweise wird daher der linienartige Kontaktbereich über die gesamte Breite der Schmalfläche angeordnet.

In dem gesamten Verfahren zum Anleimen des bandförmigen Belages wird vorgeschlagen, daß man den Belag zunächst mit einer an sich bekannten Andruckrolle anpreßt, dann den Gleitschuh zum Anpressen einsetzt und schließlich den Belag nur im Bereich einer oder beider Grenzkanten zwischen der Schmalfläche und den Breitflächen des Plattenelements andrückt. Besonders vorteilhaft ist es, wenn man den Gleitschuh unmittelbar nach der Andruckrolle einsetzt, da der Schmelzklebstoff dort noch sehr weich ist, so daß die Wellen vom Gleitschuh vollständig "herausgebügelt" werden.

Um die in Längsrichtung verlaufenden Kanten sowie quer verlaufende Wellen zu vermeiden, wird außerdem vorgeschlagen, daß man den bandförmigen Belag zunächst nur an einen Längsstreifen der Schmalfläche anpreßt und daß man danach den Kontaktbereich, ausgehend von den genannten Längsstreifen, ausweitet, bis der bandförmige Belag im gesamten Bereich der Schmalfläche angepreßt worden ist, und daß der jeweils nachfolgende Kontaktbereich den vorherigen Kontaktbereich nicht einschließt.

Der Druck auf den Belag wird daher nur in einem streifen- oder linienförmigen Bereich ausgeübt, so daß auch bei mäßiger Kraft auf das Andruckelement ein hoher Druck auf den bandförmigen Belag ausgeübt wird.

Vorzugsweise führt man das genannte Anpressen mit nur einem Gleitschuh durch.

Wenn bandförmige, auf der Basis von Papier aufgebaute Beläge mit einer auslaufenden Kante an die Schmalfläche eines Plattenelements angeklebt sind, dunkelt der Randbereich zwischen dem bandförmigen Belag und der beschichteten Hauptfläche beim Anwender nach. Da der Randbereich der auslaufenden Kante (Figur 18) aus einem Schnitt quer durch den bandförmigen Belag besteht, saugt sich das papierhaltige Material beim feuchten Abwischen voll und nimmt dabei Schmutzteilchen auf, die nicht oder nur sehr schwer wieder entfernt werden können. Zur Lösung dieses Problems ist es von Vorteil, wenn der bandförmige Belag aus einem thermoplastischen Material, insbesondere aus einem Pfropf-Copolymer von Polypropylen besteht. Dieses, auf der Basis von Polypropylen aufgebaute, an sich aus dem Stand der Technik bekannte Material ist durch Pfropf-Copolymerisation derart modifiziert, so daß es im Gegensatz zu Polypropylen problemlos an die Schmalfläche angeklebt werden kann.

Um weiterhin die in Längsrichtung verlaufenden Kanten im Falle einer abgerundeten Schmalfläche zu vermeiden, wird vorgeschlagen, daß man den bandförmigen Belag zunächst nur an einen Längsstreifen der Schmalfläche anpreßt und daß man danach den Kontaktbereich, ausgehend von dem genannten Längsstreifen, ausweitet, bis der bandförmige Belag im gesamten Bereich der Schmalfläche angepreßt worden ist.

Erfindungsgemäß wird der bandförmige Belag also zunächst an eine schmale Längszone der Schmalfläche des Plattenelements angeklebt und dort fixiert. Von dieser Längszone ausgehend weitet man den Kontaktbereich stufenweise oder allmählich aus, bis der Belag an der gesamten Schmalfläche angepreßt worden ist. Wesentlich dabei ist, daß der Belag nicht wie im Stand der Technik in nur einem Schritt an die gesamte Schmalfläche angepreßt wird, nachdem das Band zur Fixierung an einem Teilbereich der Schmalfläche angeklebt worden ist, sondern daß auch nach der Fixierung ein stufenweises oder allmähliches Ausweiten des Kontaktbereichs erfolgt.

Erfindungsgemäß wird ein gleichmäßig hoher Andruck von Teilabschnitten des Profils erreicht, ohne daß der verwendete Klebstoff, insbesondere der Schmelzklebstoff, durch die Andruckelemente zusammengeschoben wird. Durch die sich stufenweise oder allmählich vergrößernde Andruckfläche wird die bei bekannten Verfahren beobachtete Oberflächenunruhe vermieden. Durch den auf nur einen Teilbereich der Schmalfläche wirkenden Andruck tritt eine sehr gute mechanische Verankerung des Belags mit dem Plattenelement ein. Ein Vorteil liegt auch in der hohen Profiltreue ohne die bei üblichen Verfahren bei unsachgemäßer Einstellung der Gleitschuhe auftretenden Längskanten.

Zusätzlich erreicht man einen weiteren Vorteil. Die geraden oder profilierten Schmalflächen der Plattenelemente werden mit Fräswerkzeugen hergestellt, die von Zeit zu Zeit nachgeschärft werden müssen. Profilabweichungen, die durch das Nachschärfen der Fräswerkzeuge entstehen können, werden im erfindungsgemäßen Verfahren überbrückt, ohne daß die üblicherweise auftretenden Probleme mit dem Anhaften des Bandes an der Schmalfläche entstehen.

Wichtig ist auch die erfindungsgemäß erreichte Möglichkeit einer sehr hohen Verarbeitungsgeschwindigkeit, die bis zu 80 m/min betragen kann, wobei keine Qualitätseinbußen eintreten.

Im Falle eines spiegelsymmetrischen Querschnittsprofils der Schmalfläche hat es sich als besonders günstig im Hinblick auf eine wirtschaftliche Durchführbarkeit und eine hohe Qualität der beschichteten Kante herausgestellt, wenn man den bandförmigen Belag zunächst an einen Längsstreifen der Schmalfläche anpreßt, der von den Rändern der Schmalfläche etwa gleich weit entfernt ist. Dieser Längsstreifen bildet also die Mitte der Schmalfläche.

Im Falle eines Querschnittsprofils der Schmalfläche ohne Spiegelsymmetrie, z. B. eines S-Profils, ist es dagegen aus den genannten Gründen günstig, wenn man den bandförmigen Belag zunächst an den am weitesten nach außen vorstehenden Längsstreifen der Schmalfläche anpreßt. Ein anderes Beispiel für ein derartiges unsymmetrisches Querschnittsprofil wäre eine Rundung nach Art eines Viertelrundstabs, wobei die eine Fläche des Plattenelementes abgerundet ist und die andere Fläche eine Kante aufweist.

Insbesondere für das weiter unten genannte Anpressen der überstehenden Kanten des bandförmigen Belages und für eine hohe Qualität des Hauptbereich der beschichteten Schmalfläche ist es bei ein- oder zweiseitig beschichteten Plattenelementen von Vorteil, wenn man den bandförmigen Belag zunächst nur an einen Längsstreifen der Schmalfläche anpreßt, welcher von den Rändern der beschichteten Flächen des zweiseitig beschichteten Plattenelements bzw. von dem Rand der beschichteten Fläche des einseitig beschichteten Plattenelements am weitesten entfernt ist, und daß man danach den Kontaktbereich, ausgehend von dem genannten Längsstreifen, ausweitet, bis der bandförmige Belag im gesamten Bereich von diesem Längsstreifen bis zu den Rändern der beschichteten Flächen bzw. bis zum Rand der beschichteten Fläche des Plattenelements angepreßt worden ist.

Im Falle eines zweiseitig beschichteten Plattenelements geht man vorzugsweise so vor, daß man den bandförmigen Belag zunächst an einem etwa in der Mitte zwischen den Rändern der beschichteten Flächen liegenden Längsstreifen anpreßt und daß man dann den Kontaktbereich von diesem mittleren Längsstreifen zu beiden Seiten hin ausweitet.

Soll die Schmalfläche eines einseitig beschichteten Plattenelements mit dem bandförmigen Belag versehen werden, so preßt man in einer weiteren Ausgestaltung der Erfindung den bandförmigen Belag zunächst in demjenigen Randbereich der Schmalfläche an, welche an die unbeschichtete Seite des Plattenelements angrenzt und weitet dann den Kontaktbereich von diesem Randbereich zum gegenüberliegenden Randbereich hin aus.

Der größte Teil aller profilierten Schmalflächen ist mit einer Rundung, bekannt als Halbrundstab bzw. Viertelrundstab, versehen. Die Rundungen können je nach Gestaltung verschiedene Durchmesser besitzen. Vorwiegend wird als Halbrundstab mit Radien von 10 bis 25 mm gearbeitet.

Besonders bei Halbrundprofilen (sogenanntes Tonnenprofil) wird in einer Kantenanleimmaschine im Bereich der Mittelschicht einer Spanplatte auf minimaler Fläche mit Hilfe einer Andruckrolle das Beschichtungsmaterial fixiert. Dabei wird ein hoher Punktdruck auf die grobe Mittelschicht einer Spanplatte wirksam. Es entsteht eine unruhige Oberfläche durch das Anrollen des Beschichtungsmaterials. Beeinflußt wird diese Unruhe durch die Qualität der Mittelschicht einer Spanplatte.

Zur Beschichtung solcher runden Schmalflächen wird in einer weiteren Ausgestaltung der Erfindung vorgeschlagen, daß man den bandförmigen Belag an eine im Querschnitt teilkreisförmige, insbesondere halbkreisförmige, Schmalfläche anleimt und daß man den Belag nacheinander mit derartigen Gleitschuhen an die Schmalseite andrückt, deren Andruckflächen im Querschnitt ebenfalls teilkreisförmig sind und Krümmungsradien haben, die sich für zeitlich nacheinander eingesetzte Gleitschuhe bis auf einen Krümmungsradius verringern, der in etwa dem Krümmungsradius der Schmalfläche entspricht.

Des weiteren betrifft die Erfindung ein Verfahren zum Anleimen eines bandförmigen Belags an eine Schmalfläche (Kante) eines ein- oder zweiseitig beschichteten Plattenelements, insbesondere einer Span- oder Faserplatte, wobei man den Belag mit mindestens einem Gleitschuh an die Schmalfläche anpreßt. Um einen besonders glatten und fugendichten Übergang des Belages zur Beschichtung der Platte zu erreichen, wird vorgeschlagen, daß man nach dem Anpressen des Belags an die Schmalfläche in einem letzten Anpreßschritt nur den Bereich des Belages, der an die beschichtete(n) Seite(n) des Plattenelements angrenzt, anpreßt. Nach diesem Schritt wird, wie an sich bekannt ist, der Überstand des Belages mit einem Ziehmesser abgeschnitten bzw. mit einem Fräswerkzeug entfernt.

Als letzter Verfahrensschritt ist es bevorzugt, wenn der angeleimte Belag gekühlt wird, um den Schmelzklebstoff zu verfestigen und um auf diese Weise den mit den Andruckelementen erreichten Zustand zu fixieren.

In einer speziellen Ausgestaltung des erfindungsgemäßen Verfahrens können auch Plattenelemente hergestellt werden, die eine oder zwei abgerundete Kanten aufweisen, welche mit einem dünnen bandförmigen Belag beschichtet sind. Dazu wird vorgeschlagen, daß man einen bandförmigen Belag an eine Schmalfläche eines ein- oder zweiseitig beschichteten Plattenelements anleimt, wobei die Grenzkante zwischen der Schmalfläche und mindestens einer beschichteten Seite des Plattenelements abgerundet ist und der Krümmungsradius der abgerundeten Grenzkante bis 10 mm und insbesondere 1 mm bis 5 mm beträgt, und daß man den bandförmigen Belag sowohl an der Schmalfläche als auch an dessen Grenzkante(n) anpreßt und gleichzeitig kühlt. Im Gegensatz zum Stand der Technik sind hier sehr viel weniger Verfahrensschritte notwendig. Der eingesetzte Kunststoffanteil ist erheblich geringer. Probleme bei der Entsorgung von Kunststoffabfall sowie von Plattenelementen und von damit hergestellten Möbelstücken treten nicht mehr auf.

Hier geht man also von einem Plattenelement aus, dessen Grenzkanten entsprechend der gewünschten Abrundung angefräst sind. Die Schmalflächen einschließlich ihrer gerundeten Grenzkanten werden dann mit einem sehr dünnen bandförmigen Belag beschichtet, welcher in üblicher Weise aus Melamin, Polyester, PP, PVC und/oder Furnier besteht. Dieser bandförmige Belag wird mit der genannten bevorzugten Andrucktechnik, insbesondere unter Einsatz von Schmelzklebstoffen, auf die Schmalfläche aufgebracht.

Versuche haben gezeigt, daß auf diese Weise Schmalflächen beschichtet werden können, deren abgerundete Grenzkanten den sehr niedrigen Krümmungsradius von nur 1 mm aufweisen. Das Beschichten solcher Schmalflächen mit den üblichen dünnen Belägen (Dünnkanten) war bisher nicht möglich, weil nach dem Umbiegen des relativ steifen und elastischen Kantenmaterials hohe Rückstellkräfte auftreten, die bei dem weichen, noch nicht verfestigten Schmelzklebstoff zu einem Rückfedem der Belagkanten geführt haben. Dabei löste sich auch oft der Belag im mittleren Bereich der Schmalfläche.

Erfindungsgemäß lassen sich derartige Schmalflächen mit abgerundeten Grenzkanten dennoch beschichten, weil nun gleichzeitig mit dem Anpressen des Belages dieser bzw. der Schmelzklebstoff gekühlt wird, so daß schon während des Anpressens eine Klebefestigkeit erreicht wird, die die Rückstellkräfte übersteigt. Die notwendige Stärke der Kühlung hängt vom Krümmungsradius der abgerundeten Grenzkante, vom Material und der Dicke des bandförmigen Belages und vom eingesetzten Klebstoff ab und kann vom Fachmann leicht durch entsprechende Versuche herausgefunden werden.

Um ein nachträgliches Ablösen des extrem verformten dünnen Belages zu verhindern, ist es außerdem wichtig, daß nicht nur der beschichtete abgerundete Teil der Schmalflächen, sondern auch sein Hauptbereich angepreßt und gleichzeitig gekühlt wird, so daß der Schmelzklebstoff nach dem Anpressen soweit abgekühlt und verfestigt ist, um den Rückstellkräften des verformten Belages widerstehen zu können.

Hier wie auch bei den weiter oben genannten Ausgestaltungen der Erfindung kann ein unterschiedlicher Übergang des bandförmigen Belages zur Beschichtung der Hauptfläche des Plattenelementes vorgesehen sein. So kann der Belag in der Hauptfläche des Plattenelementes auslaufen, wie es in Figur 18 dargestellt ist, oder die Kante des bandförmigen Materials kann "eingelegt" sein (Figur 19).

In einer weiteren vorteilhaften Ausgestaltung wird vorgeschlagen, daß man in einem darauf folgenden Verfahrensschritt den Belag nur im Bereich der abgerundeten Grenzkante(n) anpreßt und insbesondere gleichzeitig kühlt. Auf diese Weise wird ein sehr hoher und gleichmäßiger Druck während der Abkühlphase im Bereich der abgerundeten Grenzkante bei gleichzeitiger Abkühlung aufgebracht, so daß beim Übergang von dem bandförmigen Belag zur Beschichtung der Hauptfläche des Plattenelementes keine Schmelzklebstoffuge erkennbar ist.

Die erfindungsgemäße Ausgestaltung der Beschichtung von Schmalflächen mit abgerundeten Grenzkanten läßt sich mit Vorteil insbesondere bei Schmalflächen einsetzen, welche bis auf die abgerundeten Grenzkanten im wesentlichen eben sind. Es ist aber auch durchaus möglich, daß die Schmalflächen in ihrem Hauptbereich eine Profilierung aufweisen.

Weiterhin wird vorgeschlagen, daß man beim Anpressen des bandförmigen Belages diesen in der Auslaufzone der Gleitschuhe stärker als in der Einlaufzone andrückt. Damit wird ein schonendes Anpressen des bandförmigen Belages erreicht. Es wird vermieden, daß der in der Einlaufzone besonders heiße und damit dünnflüssige Schmelzklebstoff an den Seiten der Schmalfläche herausgequetscht wird. Dieser unterschiedliche Anpressdruck kann z. B. erreicht werden, wenn an der Rückseite des Gleitschuhs jeweils eine auf die Einlaufzone und eine auf die Auslaufzone wirkende Druckfeder vorgesehen ist und die Druckfeder der Einlaufzone eine schwächere Federkraft aufweist.

Vorzugsweise hat der in einem der erfindungsgemäßen Verfahrensvarianten eingesetzte bandförmige Belag eine Dicke von 0,15 bis 0,2 mm.

Das erfindungsgemäße Verfahren läßt sich außerdem besonders gut einsetzen, wenn das Plattenelement eine Dicke von 15 bis 32 mm aufweist.

Um auf besonders wirtschaftliche Weise ein Verschmieren des Randes der beschichteten Breitfläche des Plattenelementes zu vermeiden, ohne daß-dadurch die Arbeitsgeschwindigkeit begrenzt wird, wird vorgeschlagen, daß man zunächst den Belag vollständig an die zu beschichtende Breite der Schmalfläche anpreßt, bevor man den Schmelzklebstoff am Überstand des Belages abkühlt, und schließlich den Überstand abtrennt. Das Abkühlen des Schmelzklebstoffes kann dabei unmittelbar nach dem Anpressen des Belages erfolgen.

Ein weiterer bevorzugter Gegenstand der Erfindung ist somit ein Verfahren zum Herstellen eines beschichteten Plattenelementes mit mindestens einer einen auslaufenden Rand ausweisenden beschichteten Schmalfläche, durch Anleimen eines bandförmigen, mit einem Schmelzklebstoff beschichteten Belages an eine Schmalfläche des ein- oder zweiseitig beschichteten Plattenelements, insbesondere einer Span-, Faser- oder Massivholzplatte, welches dadurch gekennzeichnet ist, dass man den in seiner Breite größer als die zu beschichtende Breite der Schmalfläche ausgeführten Belag unter Druck an die Schmalfläche anklebt, wobei man zunächst den Belag vollständig an die zu beschichtende Breite der Schmalfläche anpresst, bevor man den Schmelzklebstoff am Überstand des Belages abkühlt, und schließlich den Überstand abtrennt.

Erfindungsgemäß erhält man beschichtete Plattenetemente mit einer sogenannten "auslaufenden Kante". Hier ist im Gegensatz zum Verfahren nach der DE 34 15 053 C2 keine der Dicke des bandförmigen Belages entsprechende Aussparung am Rande der Schmalfläche vorgesehen. Vielmehr wird beim Anfräsen der Kanten des beschichteten Plattenelementes ein schräg auslaufender Rand der Beschichtung der Breitfläche erreicht. Auf diesen schräg auslaufenden Rand wird der bandförmige Belag aufgeklebt, und der Überstand wird derart abgetrennt, so daß die entstehende Schnittfläche des bandförmigen Belages bündig in die Oberfläche der Beschichtung der Breitfläche übergeht.

Da erfindungsgemäß zunächst der bandförmige Belag vollständig an die Schmalfläche angeklebt wird, ist ein erneutes Erwärmen des Schmelzklebstoffes nicht erforderlich. Durch das Abkühlen des Schmelzklebstoffes am Überstand des Belages verliert der Schmelzklebstoff seine Klebrigkeit, und durch das Abtrennen des Überstandes kann kein Schmelzklebstoff mehr auf den Rand der Beschichtung der Breitseite gelangen. Ein Verschmieren des Ziehmessers oder des Fräsers tritt außerdem nicht mehr auf. Das erfindungsgemäße Verfahren führt außerdem durch den Wegfall des Erwärmungsschrittes zu einer Erhöhung der möglichen Verarbeitungsgeschwindigkeit.

Erfindungsgemäß ist es möglich, daß man den Schmelzklebstoff über die gesamte Breite des Überstandes oder nur den an das Plattenelement angrenzenden Schmelzklebstoffbereich des Überstandes abkühlt. Wichtig ist, daß die Schmelzklebstoffschicht in demjenigen Bereich des bandförmigen Belages abgekühlt wird, an welchem das Fräsmesser bzw. das Ziehmesser angreift. Der Schmelzklebstoff soll soweit abgekühlt werden, daß ein Verschmieren der Beschichtung der Breitfläche nicht mehr auftritt. Die Stärke der erforderlichen Abkühlung hängt insbesondere von der Zusammensetzung des Schmelzklebstoffes und seiner Temperatur ab und kann vom Fachmann leicht durch entsprechende Versuche herausgefunden werden. Bei den heutzutage eingesetzten Schmelzklebstoffen ist es im allgemeinen ausreichend, wenn dieser auf eine Temperatur von 40 °C abgekühlt wird.

Vorzugsweise setzt man als Kühlmedium ein Gas, insbesondere Luft, ein. Es ist aber auch möglich, daß man als, insbesondere zusätzliches, Kühlmedium Wasser, insbesondere in Form von feinverteilten Tröpfchen, einsetzt. Das verdampfende Wasser führt bei seiner Verdunstung zu einem zusätzlichen Kühleffekt. Hier ist es außerdem von Vorteil, wenn man die Menge des eingesetzten Wassers begrenzt, so daß das Wasser vor dem Abtrennen des Überstandes im wesentlichen vollständig verdampft ist. Auf diese Weise wird verhindert, daß das Fräswerkzeug oder das Ziehmesser mit Feuchtigkeit in Berührung kommt, welche zu Störungen, Korrosion oder anderen Nachteilen führen könnte.

Wenn man zum Anpressen des Belages mindestens ein gekühltes Andruckelement, insbesondere einen Gleitschuh, einsetzt, ist es von Vorteil, wenn man das Andruckelement mit dem gleichen Kühlmedium wie den Schmelzklebstoff am Überstand des Belages kühlt. Das ohnehin zum Kühlen des Andruckelementes vorhandene Kühlmedium wird also hier in effektiver Weise auch zum Kühlen des Überstandes eingesetzt.

Dabei ist es besonders bevorzugt, wenn man das Kühlmedium zuerst zur Kühlung des Andruckelementes und anschließend zum Abkühlen des Überstandes einsetzt. Das erfindungsgemäße Abkühlen des Überstandes erfordert daher keinen Mehrverbrauch des Kühlmediums.

Beim Anleimen des bandförmigen Belages an die Schmalfläche von Plattenelementen werden diese mit hoher Geschwindigkeit an den stationären Andruckelementen vorbeigeführt. Zum Erzielen einer besonders guten Kühlwirkung ist es von Vorteil, wenn man das kühlende Gas entgegen der Vorschubrichtung des Plattenelementes auf den Überstand des Belages strömen läßt. Auf diese Weise bleibt das Kühlgas über einen besonders langen Zeitraum an der Oberfläche des abzukühlenden Schmelzklebstoffes wirksam.

Da insbesondere der Schmelzklebstoff im Grenzbereich zwischen dem Überstand und dem Plattenelement erfindungsgemäß abgekühlt werden soll, wird weiterhin vorgeschlagen, daß man die Strömung des kühlenden Gases gezielt auf den Schmelzklebstoff in diesem Grenzbereich richtet. Zu diesem Zweck kann man spezielle Auslaßdüsen vorsehen.

Vorzugsweise liegt die Temperatur des kühlenden Gases bei 0 °C bis 20 °C. Insbesondere liegt die Temperatur des kühlenden Gases bei 0 °C bis 5 °C. Diese relativ starke Abkühlung, welche die Kühlleistung verbessert, kann durch den Einsatz einer sogenannten Kältepistole erreicht werden. Derartige Kältepistolen sind an sich bekannt. Sie ermöglichen eine Temperaturabsenkung um 20 bis 50 °C, indem Preßluft unter sehr hoher Geschwindigkeit durch eine spezielle Düse geführt wird und sich beim Entspannen abkühlt.

Weiterhin wird vorgeschlagen, daß man die Strömungsgeschwindigkeit des kühlenden Gases so hoch wählt, daß das Andruckelement auf eine Temperatur von etwa 20°C gekühlt wird.

### Ausführungsbeispiele

Im folgenden werden mehrere Ausführungsbeispiele der Erfindung anhand von Zeichnungen näher erläutert. Es zeigen
- Figur 1: einen Gleitschuh gemäß der Erfindung für gerade Schmalflächen in perspektivischer Darstellung,
- Figur 2: eine schematische Darstellung der Verwendung des Gleitschuhs nach Figur 1,
- Figuren 3a, b: je einen Schnitt durch einen erfindungsgemäßen Gleitschuh in unterschiedlicher Ausführung,
- Figur 4: die Draufsicht auf einen weiteren Gleitschuh gemäß der Erfindung,
- Figur 5: eine Frontansicht von der Einlaufseite des Gleitschuhs nach Figur 4,
- Figur 6: eine Frontansicht des Gleitschuhs nach Figur 4 an der Auslaufseite,
- Figur 7: eine schematische Darstellung des Beschichtungsverfahrens nach dem Stand der Technik sowie nach einem ersten Schritt des erfindungsgemäßen Verfahrens,
- Figur 8: eine perspektivische Darstellung des weiteren Gleitschuhs im erfindungsgemäßen System von Andruckelementen,
- Figur 9: die Durchführung des Verfahrensschrittes mit dem Gleitschuh nach Figur 8 in schematischer Darstellung,
- Figur 10: eine Seitenansicht des Gleitschuhs nach den Figuren 8 und 9,
- Figur 11: eine perspektivische Darstellung der Herstellung eines weiteren erfindungsgemäßen Gleitschuhs, für gekrümmte Schmalflächen,
- Figur 12: eine Draufsicht auf den erfindungsgemäßen Gleitschuh nach Figur 11,
- Figur 13: eine perspektivische Darstellung des erfindungsgemäßen Gleitschuhs während der Beschichtung einer Schmalfläche eines Plattenelementes,
- Figur 14: einen Schnitt entlang der Linie IV-IV in Figur 13,
- Figur 15: einen Schnitt entlang der Linie V-V in Figur 13,
- Figur 16a: eine Draufsicht auf einen weiteren erfindungsgemäßen Gleitschuh für gekrümmte Schmalflächen,
- Figur 16b: einen Schnitt durch eine Spanplatte,
- Figur 17: einen Schnitt entlang der Linie VII-VII in Figur 16a,
- Figur 17a: einen Gleitschuh für gerade Schmalflächen in einer Darstellung entsprechend Figur 17,
- Figur 18: einen Schnitt durch den Schmalflächenbereich eines erfindungsgemäß beschichteten Plattenelementes mit einer "auslaufenden Kante",
- Figur 19: einen Schnitt entsprechend Figur 18 mit einer "eingelegten Kante",
- Figur 20: den ersten Verfahrensschritt eines weiteren erfindungsgemäßen Ausführungsbeispiels,
- Figur 21: den zweiten Verfahrensschritt, wobei Kantenmaterial allmählich um die gerundete Schmalseite herumgelegt wird,
- Figur 21a: einen in diesem Verfahrensschritt alternativ einsetzbaren Gleitschuh im Schnitt,
- Figur 22: den dritten Verfahrensschritt,
- Figur 23: einen darauffolgenden Verfahrensschritt zum Anpressen der Ränder des Kantenmaterials,
- Figur 24: eine Seitenansicht eines erfindungsgemäßen Gleitschuhs,
- Figur 25: eine Ansicht des erfindungsgemäßen Gleitschuhs von vorne,
- Figuren 26 bis 28: Gleitschuhe nach einer weiteren Ausgestaltung der Erfindung,
- Figur 29: einen Schnitt durch den Schmalflächenbereich eines Plattenelementes nach dem Stand der Technik,
- Figur 30: den ersten Verfahrensschritt eines weiteren erfindungsgemäßen Ausführungsbeispiels,
- Figur 31: den zweiten Verfahrensschritt nach diesem Beispiel,
- Figur 32: den dritten Verfahrensschritt des Ausführungsbeispiels nach den Figuren 30 und 31,
- Figur 33: den vierten Verfahrensschritt nach diesem Ausführungsbeispiel,
- Figur 34: einen Schnitt durch einen gekühlten Gleitschuh entsprechend der Erfindung,
- Figur 35: einen Querschnitt durch einen erfindungsgemäßen Gleitschuh während der Durchführung des erfindungsgemäßen Verfahrens,
- Figur 36: einen Schnitt entlang der Linie II-II nach Figur 35,
- Figur 37: eine Ansicht der Andruckfläche eines erfindungsgemäßen Gleitschuhs nach einer besonderen Ausgestaltung und
- Figur 38: einen Schnitt durch einen Gleitschuh nach dem Stand der Technik während des Anpressens eines bandförmigen Belages an die Schmalfläche eines Plattenelementes.

In allen Zeichnungen haben gleiche Bezugszeichen die gleiche Bedeutung und werden daher gegebenenfalls nur einmal erläutert.

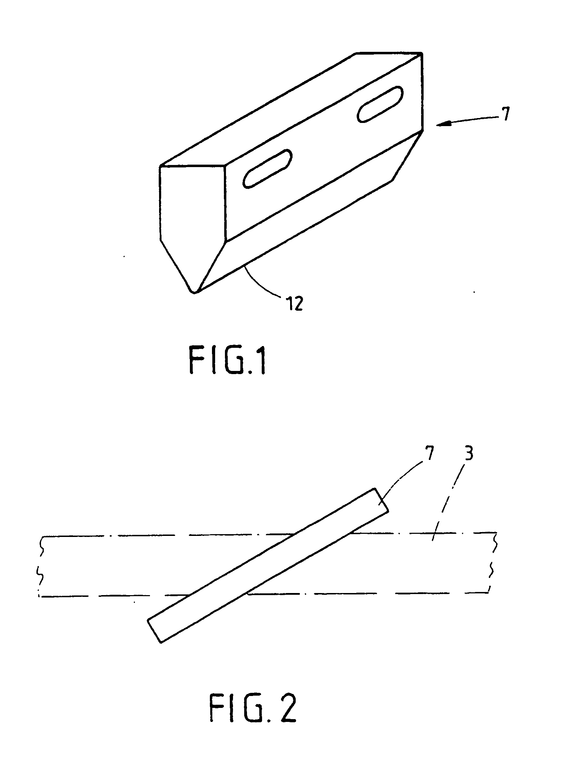

### Ausführungsbeispiele nach den Figuren 1 bis 10

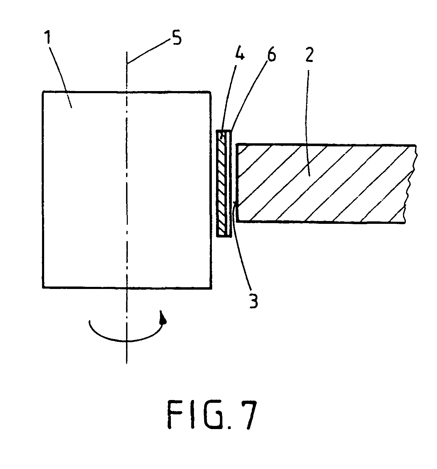

Im Stand der Technik werden die geraden Schmalflächen der Plattenelemente mit Hilfe von Andruckrollen, die einen Durchmesser bis zu 200 mm haben können, beschichtet, wie es in Figur 7 dargestellt ist. Die Andruckrolle 1 mit ihrer Drehachse 5 preßt den bandförmigen Belag 4, welcher mit dem heißen Schmelzklebstoff 6 beschichtet ist, an die Schmalfläche 3 des Plattenelements 2. Durch das Abrollen der Andruckrolle 1 auf dem Belag 4 entstehen die oben genannten Wellen an der Oberfläche der fertig beschichteten Schmalfläche 3.

Bekannt ist es außerdem, daß mehrere hintereinandergeschaltete Andruckrollen eingesetzt werden.

Erfindungsgemäß wird dagegen ein Gleitschuh 7 eingesetzt, welcher einen linienartigen Kontaktbereich 12 aufweist (Figur 1). Im Beispiel nach Figur 1 verläuft dieser Kontaktbereich 12 über die gesamte Länge des Gleitschuhs 7 und parallel zur Längsrichtung dieses Gleitschuhs.

Bei der Verwendung des Gleitschuhs 7 wird dieser schräg zur Schmalfläche 3 des mit hoher Geschwindigkeit vorbeilaufenden Plattenelements ausgerichtet, wie es in Figur 2 schematisch dargestellt ist.

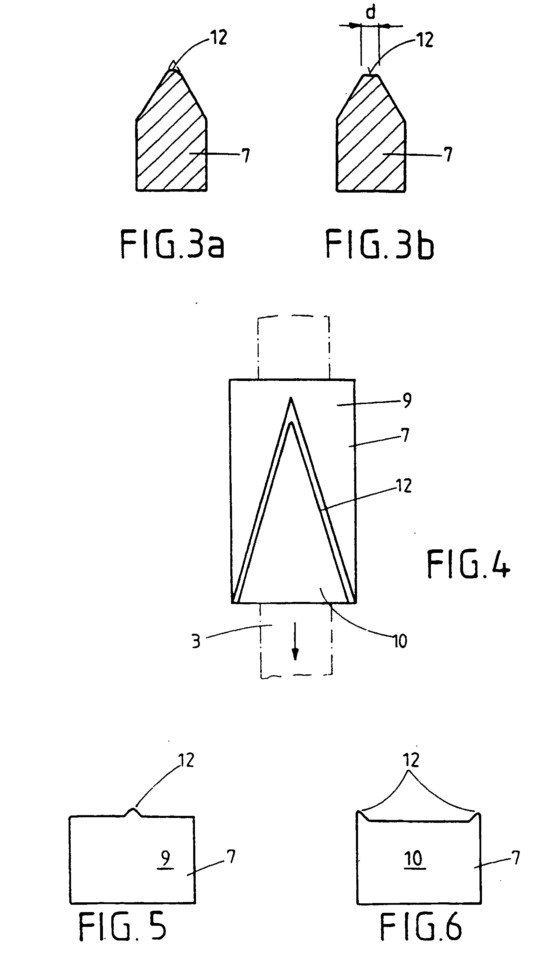

Dabei kann der Gleitschuh 7 eine spitzen oder kreisförmig abgerundeten (Figur 3a) oder gerade abgeschnittenen (Figur 3b) Kontaktbereich 12 aufweisen. Die Breite d des Kontaktbereiches 12 sollte vorzugsweise nicht größer als 5 mm sein, damit ein nahezu linienartiger Andruck erreicht wird.

Einen alternativ ausgestalteten Kontaktbereich 12 zeigt die Figur 4. Hier besteht der Kontaktbereich 12 aus zwei schräg zur Längsrichtung des Gleitschuhs verlaufenden abgerundeten Kanten, wobei sich der Kontaktbereich 12 in diesem Fall nicht über die gesamte Länge des Gleitschuhs erstreckt. Die Laufrichtung des Plattenelements 3 ist durch einen Pfeil gekennzeichnet. Daraus ist ersichtlich, daß der bandförmige Belag in der Einlaufzone 9 im mittleren Bereich und in der Auslaufzone 10 im Randbereich angepreßt wird.

Vorzugsweise wird ein System von Andruckelementen bei der Durchführung des erfindungsgemäßen Verfahrens verwendet. Das erste Andruckelement ist die in Figur 7 dargestellte, an sich bekannte Andruckrolle, welche oben bereits erläutert worden ist.

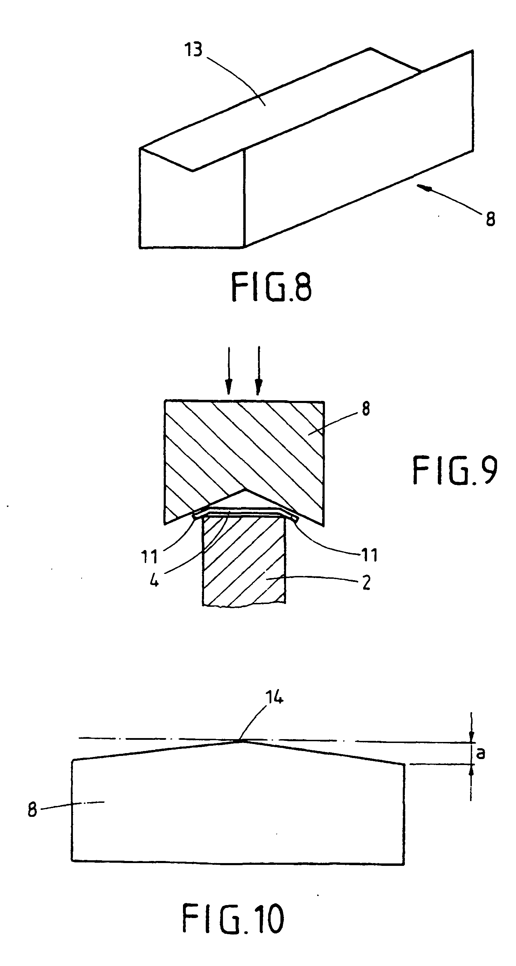

Das zweite Andruckelement ist ein Gleitschuh nach den Figuren 1 bis 6. Das dritte Andruckelement ist ein in Figur 8 perspektivisch dargestellter weiterer Gleitschuh 8, bei welchem die Andruckfläche 13 konkav ausgebildet ist und aus zwei in Längsrichtung verlaufenden, gegeneinander geneigten ebenen Flächen besteht. Damit wird erreicht, daß der bandförmige Belag 4 im Bereich der äußeren Kante der Schmalfläche 3 und nur dort stark angepreßt wird (Figur 9), so daß nach dem Abschneiden der überstehenden Ränder 11 eine nicht oder kaum sichtbare Klebstoffuge zwischen dem bandförmigen Belag 4 und der Schmalfläche 3 die Folge ist. Dabei ist außerdem zu beachten, daß der eingeschliffene Winkel zwischen den Teilflächen der Andruckfläche 13 nicht zu klein ist, damit die überstehenden Ränder 11 nicht abgeknickt werden, sondern sich höchstens um die Kante der Schmalfläche biegen lassen.

Zur Erhöhung des Andrucks ist es außerdem von Vorteil, wenn der Gleitschuh 8 in Längsrichtung angeschliffen ist, wie es in Figur 10 dargestellt ist. Dabei ist es bevorzugt, wenn die Andruckfläche 13 an beiden äußeren Enden nur um einen Wert a von etwa 0,3 mm abgetragen worden ist. Damit erreicht man, daß ein besonders hoher Anpreßdruck nur im mittleren Bereich 14 der Andruckfläche 13 wirksam wird.

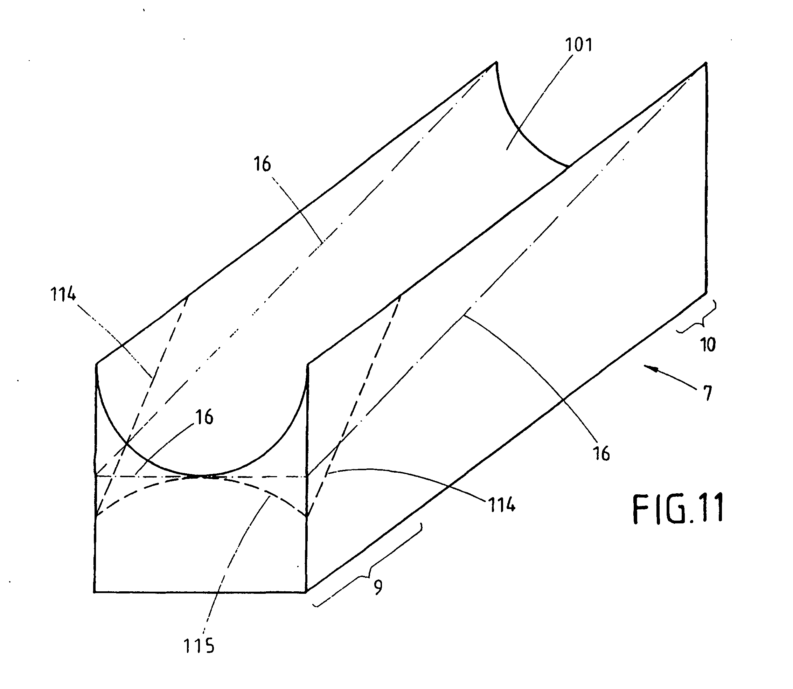

### Ausführungsbeispiele nach den Figuren 11 bis 19

In Figur 11 ist ein aus Stahl bestehender Gleitschuh 7 dargestellt, der über seine gesamte Länge von 60 mm mit einem halbkreisförmigen Profil 101 versehen ist. Das Profil entspricht der zu bearbeitenden profilierten Schmalfläche einer Spanplatte, wobei die Dicke des aufzubringenden Belages und die Schichtdicke des Schmelzklebstoffes berücksichtigt ist

Zur Herstellung des erfindungsgemäßen Gleitschuhs wird dieser, in Figur 11 mit durchgezogenen Linien dargestellte Gleitschuh entlang der gestrichelten Linien 114, 115 abgefräst, so daß eine sowohl in Längsrichtung als auch in Querrichtung abgerundete Einlaufzone 9 entsteht, mit welcher der aufzubringende bandförmige Belag zuerst in Berührung kommt, wie noch weiter unten im einzelnen dargestellt ist. Danach wird ein Teil der Oberseite des Gleitschuhs 7 bis zu einer durch die strichpunktierten Linien 16 dargestellten Trennfläche abgetrennt. Diese Trennfläche berührt die Einlaufzone 9 an ihrer tiefsten Stelle tangential und verläuft schräg nach oben bis zum höchsten Punkt der Auslaufzone 10.

Abgerundete Einlaufzonen sind an sich bekannt. Eine in Längsrichtung abgerundete Einlaufzone findet sich beispielsweise in Figur 3 der DD 287 606 A.

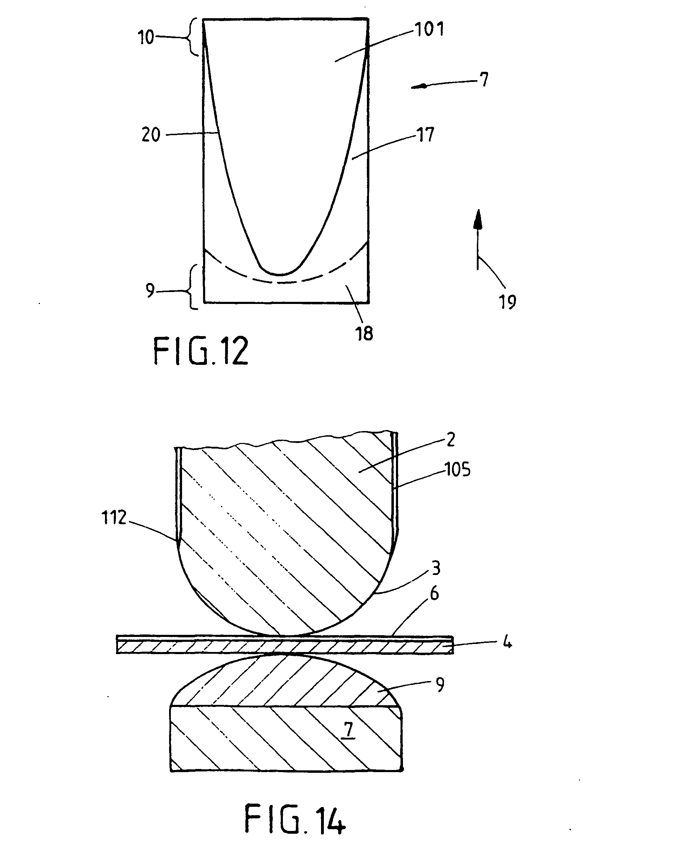

Nach diesen Herstellungsschritten erhält man den erfindungsgemäßen Gleitschuh nach einem ersten Ausführungsbeispiel. Die Draufsicht auf diesen Gleitschuh 7 ist in Figur 12 gezeigt. An das konkave, teilkreisförmige Profil 101 grenzt die ebene, schräg verlaufende Trennfläche 17 an, welche zur Einlautzone 9 hin in den in Längs- und Querrichtung abgerundeten Bereich 18 übergeht.

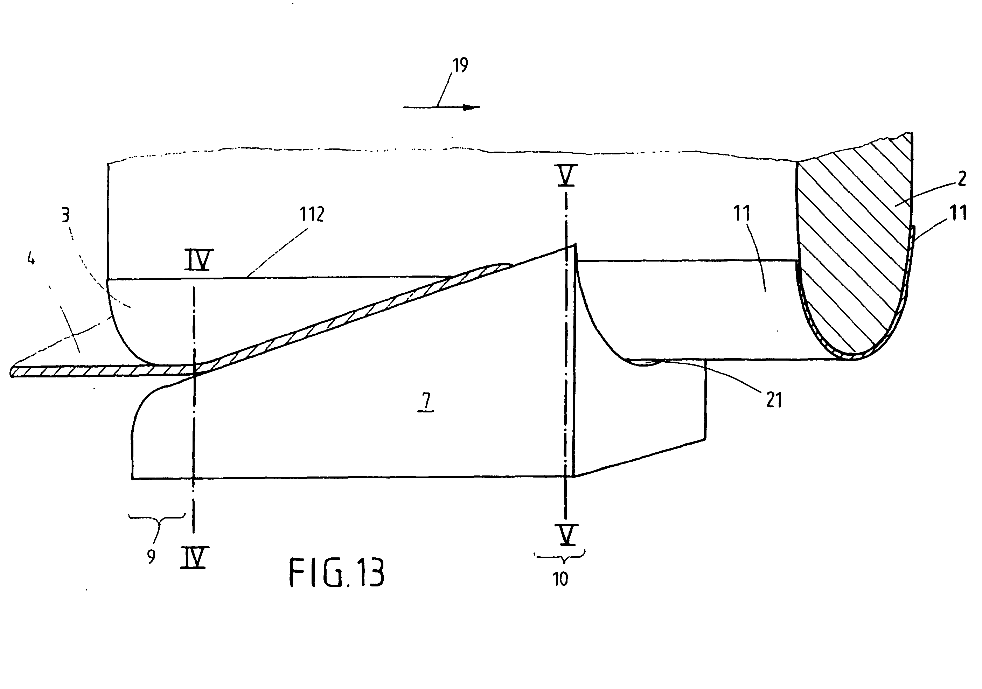

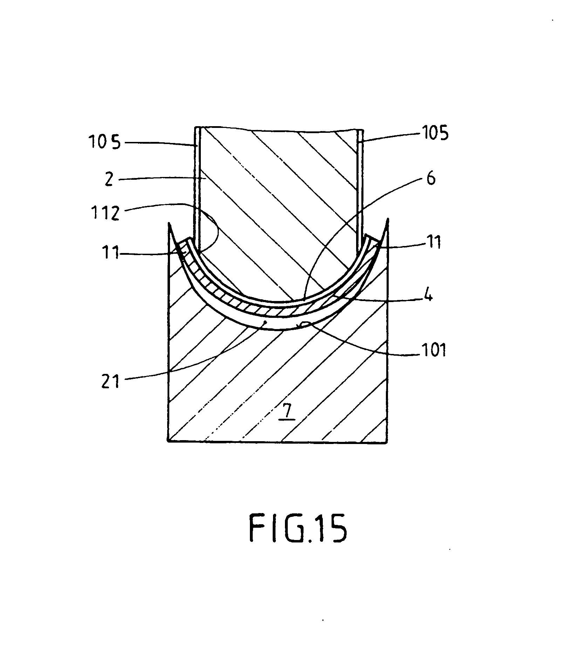

Die Arbeitsweise mit dem erfindungsgemäßen Gleitschuh nach den Figuren 11 und 12 ist perspektivisch in Figur 13 dargestellt. Eine Spanplatte 2 mit einer halbkreisförmig abgerundeten Schmalfläche 3 wird hier mit einem bandförmigen Belag 4 beschichtet, welcher auf seiner der Schmalfläche 3 zugewandten Seite mit einem in Figur 13 nicht dargestellten Schmelzklebstoff beschichtet ist. Der Belag 4 ist im Bereich der Einlaufzone 9 des Gleitschuhs 7 noch eben und wird dort an einen in der Mitte verlaufenden Längsstreifen der Schmalfläche 3 angepreßt (Figur 14). In den Figuren 14 und 15 sind der Vollständigkeit halber auch die Schmelzklebstoffschicht 6 auf dem bandförmigen Belag 4 und das auf den Breitflächen der Spanplatte 2 aufgebrachte Kunststoffmaterial 105 dargestellt.

Bei der durch den Pfeil 19 angedeuteten Bewegung der Spanplatte 2 zusammen mit dem bandförmigen Belag 4 gelangt dieser von der Einlaufzone 9 in den mittleren Bereich des Gleitschuhs 7 und wird von dessen Profilierung in Richtung auf die Spanplatte 2 umgebogen (Figur 13), bis der Belag 4 im Bereich der Auslaufzone 10 vollständig an der Schmalfläche 3 anliegt und mittels des Schmelzklebstoffs 6 angeklebt ist. Die an beiden Seiten des Belages 4 überstehenden Ränder 11 werden später bündig abgeschnitten.

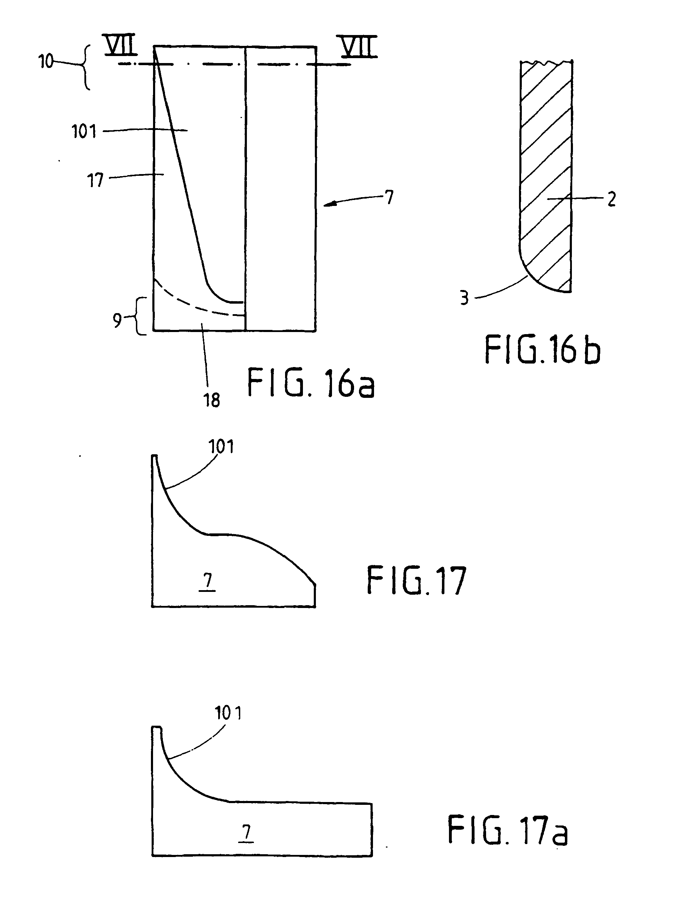

Ein weiteres Ausführungsbeispiel des erfindungsgemäßen Gleitschuhs ist in den Figuren 16a und 17 dargestellt. Dieser Gleitschuh ist vorgesehen zum Beschichten von einseitig abgerundeten Schmalflächen 3 von Plattenelementen 2. Figur 16b zeigt einen Schnitt durch eine derartige Spanplatte 2. In dem linken Teil der Draufsicht nach Figur 16a ist der Gleitschuh in gleicher Weise ausgeführt wie der Gleitschuh nach den Figuren 11 bis 15. Auf der rechten Seite der Figuren 16a und 17 ist die Profilierung des Gleitschuhs völlig entfernt worden, wie insbesondere aus Figur 17 hervorgeht, welche einen Schnitt im Bereich der Auslaufzone 10 des Gleitschuhs 7 zeigt.

Mit dem erfindungsgemäßen Gleitschuh kann eine Beschichtung sowohl mit einer sogenannten "auslaufenden Kante" (Figur 18) als auch mit einer "eingelegten Kante" (Figur 19) hergestellt werden.

In entsprechender Weise kann mit dem Gleitschuh nach Figur 17a eine gerade Schmalfläche beschichtet werden.

Bei der auslaufenden Kante liegt der Rand des bandförmiges Belages teilweise auf der Beschichtung 105 des Plattenelements 2 auf. Im Falle der eingelegten Kante wird der Überstand des bandförmiges Belages 4 während des Beschichtens mit einem Trennmesser derart zugeschnitten, so daß der Rand des bandförmigen Belages 4 praktisch nahtlos an den Rand der Beschichtung 105 anschließt (Figur 19).

Im folgenden werden die Besonderheiten des erfindungsgemäßen Verfahrens sowie des erfindungsgemäßen Gleitschuhs im einzelnen erläutert.

Der erfindungsgemäße Gleitschuh und das erfindungsgemäße Verfahren wird vorzugsweise im Softformingverfahren eingesetzt. Die beiden besonders wichtigen Vorteile der Erfindung liegen zum einen in der besonders schnellen Ummantelung der Schmalfläche, bevor noch der Schmelzkleber zu stark abgekühlt und damit zähflüssig wird, denn die gesamte Ummantelung wird mit nur einem Gleitschuh erreicht. Zum anderen wird bei nur mäßiger Kraft auf den Gleitschuh ein hoher Anpreßdruck erreicht, da der Belag 4 nur im Grenzbereich 20 zwischen dem konkaven Profil 1 und der Trennfläche 17 am Gleitschuh 7 anliegt und auch nur dort angepreßt wird (Figur 12). In der Praxis hat diese Anpreßlinie 20 eine Breite von etwa 1 mm.

Wenn man die Bewegung der Spanplatte in Richtung des Pfeils 19 berücksichtigt, wird im Bereich der Einlaufzone 9 nur der mittlere Bereich des bandförmigen Belages 4 angepreßt (Figur 12). Der Kontaktbereich vergrößert sich dann weiter nach außen entsprechend der Linie 20, wobei der jeweilige Kontaktbereich den vorherigen Kontaktbereich nicht einschließt. Schließlich werden in der Auslaufzone 10 nur die äußeren Ränder des bandförmigen Belages 4 angepreßt.

Vorzugsweise ist der Krümmungsradius des konkaven Profils 1 um 0,1 bis 0,5 mm kleiner als der Krümmungsradius der Schmalfläche 3 der Spanplatte 2. Auf diese Weise ist sichergestellt, daß der Belag 4 nur entlang der Linie 20 (Figur 12) angepreßt wird. Dieser Zusammenhang wird besonders deutlich in Figur 15, die einen Schnitt im Bereich der Auslaufzone zeigt. Im mittleren Bereich des bandförmigen Belages 4 ist deutlich ein Spalt 21 zwischen dem Belag und dem Profil 101 des Gleitschuhs 7 zu erkennen. Im vorliegenden Ausführungsbeispiel hat der Spalt 21 eine Breite von 0,3 mm. Die Ränder des Belages 4 liegen jedoch eng am Profil 101 des Gleitschuhs 7 an, und nur dort wird Druck vom Gleitschuh 7 ausgeübt.

Wesentlich ist also die in Figur 12 dargestellte Anpreßlinie 20. Sie kann in einer bevorzugten Ausgestaltung der Erfindung abgerundet sein, damit der Anpreßdruck möglichst schonend auf die Oberfläche des Belages 4 wirkt. Dabei ist jedoch darauf zu achten, daß die Breite der Anpreßlinie nicht zu groß wird, damit der aufgebrachte Druck nicht zu stark absinkt.

Zum Beschichten von Schmalflächen besonders dicker Platten können auch mehrere hintereinander angeordnete erfindungsgemäß ausgestaltete Gleitschuhe vorgesehen sein. Zunächst wird der Belag 4 durch einen relativ schmalen Gleitschuh angepreßt. Dann folgt ein breiterer Gleitschuh, so daß auch die weiter außen liegenden Bereiche des nunmehr besonders breiten Belages 4 angedrückt werden, bis schließlich mit dem letzten Gleitschuh auch der Randbereich des Belages 4 mit hohem Druck angepreßt wird.

Ein weiterer Vorteil des erfindungsgemäßen Gleitschuhs und des entsprechenden Verfahrens liegt in der Möglichkeit, Profilabweichungen der Schmalfläche 3 auszugleichen. Solche Abweichungen treten beim Nachschärfen der Fräsmesser auf, welche zum Profilieren der Spanplatten eingesetzt werden. Da der erfindungsgemäße Gleitschuh nicht vollflächig, sondern nur entlang der Linie 20 (Figur 12) am bandförmigen Belag 4 anliegt, liegt der vorgesehene Kontaktbereich selbst dann vollständig am Belag an, wenn die Profilform der Schmalfläche geringfügig schwankt.

Von Vorteil ist schließlich auch, daß durch den hohen Anpreßdruck im Randbereich des Belages 4 eine sehr schmale und mit dem bloßen Auge kaum sichtbare Klebstoffuge bei einer beschichteten Schmalfläche mit auslaufender Kante erreicht wird.

### Ausführungsbeispiele nach den Figuren 20 bis 34

Eine Spanplatte 2 mit einer halbkreisförmig abgerundeten Schmalfläche 3 soll mit einem bandförmigen Belag 4 beschichtet werden. Die Spanplatte 2 ist beidseitig mit einem Kunststoffmaterial 105 beschichtet. Der bandförmige Belag 4 ist an seiner Innenseite mit Schmelzklebstoff 6 versehen.

Im ersten Verfahrensschritt nach Figur 20 wird der bandförmige Belag 4 in einer Mittelzone der Schmalfläche 3 angeklebt und dort fixiert. Dazu dient eine Andruckrolle 7' mit einer Andruckfläche 13. In den Figuren ist der Übersichtlichkeit halber die Dicke des Kunststoffmaterials 105 sowie des bandförmigen Belages 4 übertrieben groß dargestellt. Tatsächlich liegen die Dicken bei Bruchteilen eines Millimeters.

Der im zweiten Verfahrensschritt nach Figur 21 eingesetzte Gleitschuh 7 hat eine Andruckfläche 13 mit einem Krümmungsradius, welcher deutlich größer als der Krümmungsradius der Schmalfläche 3 ist. Damit wird der bandförmige Belag 4 nicht vollständig an die Schmalfläche 3, sondern nur im Mittelbereich angepreßt. In den Figuren 21 bis 23 ist der Schmelzklebstoff 6 der Einfachheit halber nicht dargestellt. Ferner wurden hier die Gleitschuhe 7 im Abstand vom Belag 4 gezeichnet, um den Sachverhalt deutlicher erkennen zu lassen.

Im darauffolgenden Verfahrensschritt wird ein Gleitschuh 7 eingesetzt, dessen Andruckfläche 13 im wesentlichen den gleichen Krümmungsradius wie die Schmalfläche 3 der Spanplatte 2 hat (Figur 22). Der Belag 4 wird hier also vollflächig auf die Schmalfläche 3 gedrückt.

Die Gleitschuhe nach den Figuren 20 bis 23 können auch in ihrer Dicke variieren, so daß ein relativ schmaler Gleitschuh bei dem Verfahren nach Figur 21 eingesetzt wird. Auf diese Weise vermeidet man eine vorzeitige Abkühlung der Randbereiche. Eine solche Ausführungsform ist in Figur 21 a dargestellt.

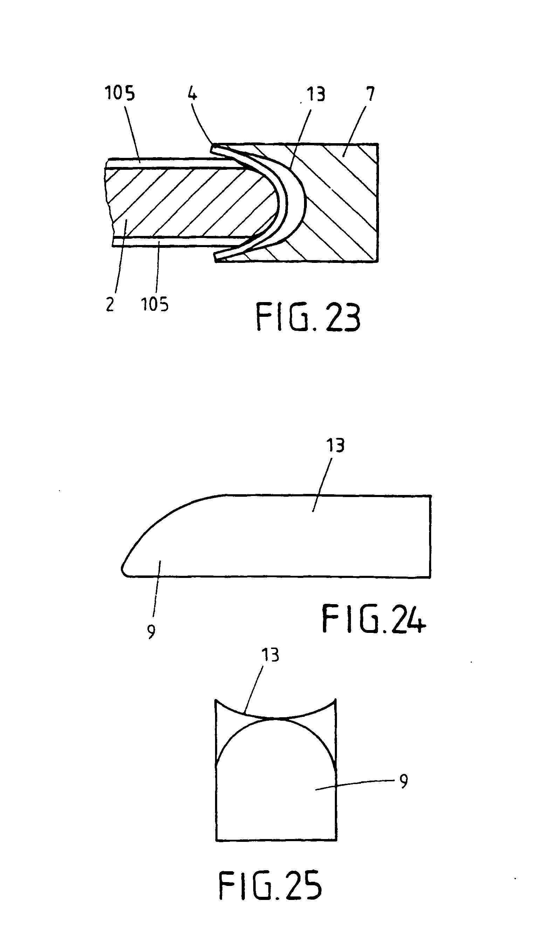

Die in den Figuren 20 bis 23 eingesetzten Gleitschuhe haben eine Länge von 60 mm. Die geometrische Form der Einlaufzonen ist in den Figuren 24 und 25 dargestellt.

In einem praktischen Ausführungsbeispiel werden anstelle der zwei Gleitschuhe 7 nach den Figuren 21 und 22 fünf Gleitschuhe eingesetzt, die auf die Andruckrolle 7' folgen. Hat die Schmalfläche beispielsweise einen Krümmungsradius von 14,0 mm, so haben die Andruckflächen der Gleitschuhe Krümmungsradien von 16,0, 15,0, 14,5, 14,0 und schließlich 13,0 mm. Diese Gleitschuhe haben jeweils eine Länge von 60 mm. Der letzte Gleitschuh sorgt für einen besonders starken Andruck der Ränder des Kantenmaterials.

Um eine besonders dichte Fuge und einen besonders glatten Übergang des Kantenmaterials 4 zum Kunststoffmaterial 105 zu erhalten, wird in einem vorletzten Schritt ein Gleitschuh 7 mit einer Andruckfläche 13 eingesetzt, die einen Krümmungsradius von 13,0, also deutlich weniger als der Krümmungsradius der Schmalfläche 3, aufweist. Diese Situation ist in Figur 23, der Deutlichkeit halber übertrieben, dargestellt. Die Andruckfläche 13 des Gleitschuh 7 berührt den bandförmigen Belag nur in den beiden Randbereichen und preßt ihn dort an das Kunststoffmaterial 105 der Spanplatte 2 an. Dieser Schritt hat den Vorteil, daß eine besonders dichte und glatte Fuge zwischen dem Kunststoffmaterial 105 und dem bandförmigen Belag 4 erreicht wird, wenn nach dem Anpressen das überstehende Material des Belages 4 mit einem Ziehmesser abgeschnitten oder mit einem Fräswerkzeug abgetrennt wird.

Der im letzten Andruckschritt eingesetzte, in den Zeichnungen nicht dargestellte Gleitschuh ist deutlich länger als die vorhergehenden Gleitschuhe nach den Figuren 21 und 22, und seine Länge beträgt in diesem speziellen Ausführungsbeispiel 300 mm. Er hat aber den gleichen Krümmungsradius wie der vorhergehende Gleitschuh nach Figur 23. Es können hier auch mehrere gleiche Gleitschuhe vorgesehen sein. Diese Gleitschuhe haben eine Luftkühlung. Dazu sind Kühlkanäle vorgesehen, durch die die Luft im Bereich des bandförmigen Belages austritt und auf diese Weise ein schnelles Erkalten und Verfestigen des Schmelzklebstoffs ermöglicht, so daß der aufgeklebte Belag schon kurz nach dem Aufkleben in seiner Lage fixiert wird und sich nicht mehr löst. Von Vorteil ist auch, wenn nur der Randbereich gekühlt wird, da hier die größten Spannungen auftreten. Der mittlere Bereich dagegen sollte erst langsamer erkalten, damit eventuelle dort vorhandene Spannungen sich ausgleichen und eine besonders glatte Oberfläche des Belags erreicht wird.

Figur 24 zeigt eine Seitenansicht eines Gleitschuhs. Links erkennt man deutlich die in Längsrichtung abgerundete Einlaufzone 9.

Figur 25 zeigt eine Ansicht des Gleitschuhs von vorne. Die Einlaufzone 9 ist nach dieser Zeichnung auch quer zur Längsrichtung abgerundet.

Die Figuren 26 bis 28 zeigen in einer weiteren Ausgestaltung der Erfindung einen Satz von Gleitschuhen 7, die im Falle von ebenen Schmalflächen 3 erfindungsgemäß einsetzbar sind. Im ersten, nicht dargestellten Verfahrensschritt setzt man eine schmale Andruckrolle ein, die den Belag im mittleren Bereich der Schmalfläche 3 andrückt. Dann wird das Verfahren in der Reihenfolge der Figuren 26 bis 28 durchgeführt, wobei im letzten, ebenfalls nicht dargestellten Schritt nur der Randbereich des bandförmigen Belages 4 angepreßt wird. In den Figuren 26 bis 28 sind der Deutlichkeit halber weder das Kunststoffmaterial 105 der Spanplatte 2 noch der bandförmige Belag 4 mit dem Schmelzklebstoff 6 dargestellt.

Die Andruckflächen sind bei den aus Stahl bestehenden Gleitschuhen vorzugsweise hochglanzpoliert und verchromt, um eine besonders glatte Oberfläche der beschichteten Kante zu gewährleisten.

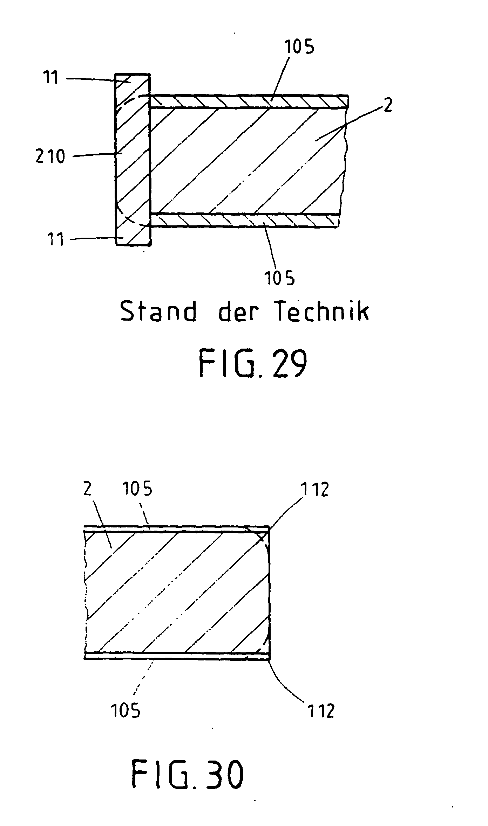

Im folgenden wird das erfindungsgemäße Verfahren und die dazu besonders geeignete Vorrichtung zum Beschichten der Schmalflächen von Plattenelementen mit abgerundeten Grenzkanten anhand der Figuren 29 bis 33 näher erläutert.

Figur 29 zeigt schematisch die Herstellung von Schmalflächen mit abgerundeten Grenzkanten nach dem Stand der Technik. Auf das beidseitig beschichtete Plattenelement 2 wird eine aus Kunststoff bestehende sogenannte Dickkante 210 geklebt. Danach werden die überstehenden Ränder 11 entlang der gestrichelten Linien und entsprechend der gewünschten Abrundung abgefräst und anschließend mit einer speziellen Ziehklinge abgeschnitten.

Erfindungsgemäß wird dagegen zunächst die gewünschte Abrundung der Grenzkanten 112 durch Anfräsen hergestellt, so daß man die abgerundeten Kanten, die in Figur 30 gestrichelt dargestellt sind, erhält.

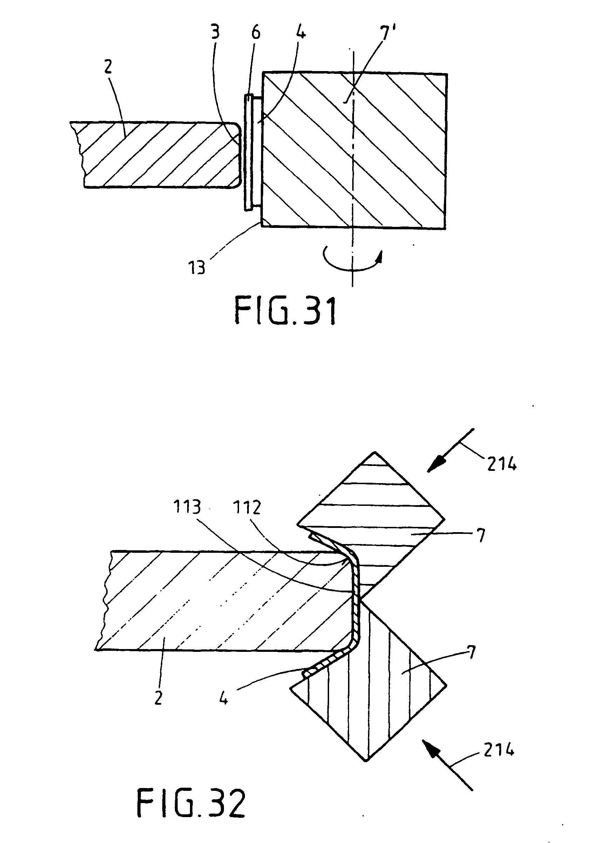

In einem zweiten Verfahrensschritt wird der dünne bandförmige Belag 4, welcher mit heißem Schmelzklebstoff 6 beschichtet ist, mittels einer Andruckrolle 7' an den ebenen Bereich der Schmalfläche 3 angedrückt und dort fixiert (Figur 31). In den Figuren 31 bis 33 ist die Beschichtung 105 der Hauptfläche (Breitfläche) des Plattenelements 2 der Übersichtlichkeit halber nicht dargestellt.

Anschließend kommen zwei Gleitschuhe 7 zum Einsatz, welche den bandförmigen Belag 4 sowohl im ebenen Bereich 113 als auch im Bereich der Grenzkante 112 anpressen und auch gleichzeitig kühlen (Figur 32). Dabei wirken die Kräfte auf die Gleitschuhe 7 in Richtung der Pfeile 214, so daß der Bereich der Grenzkante 112 besonders stark angepreßt wird.

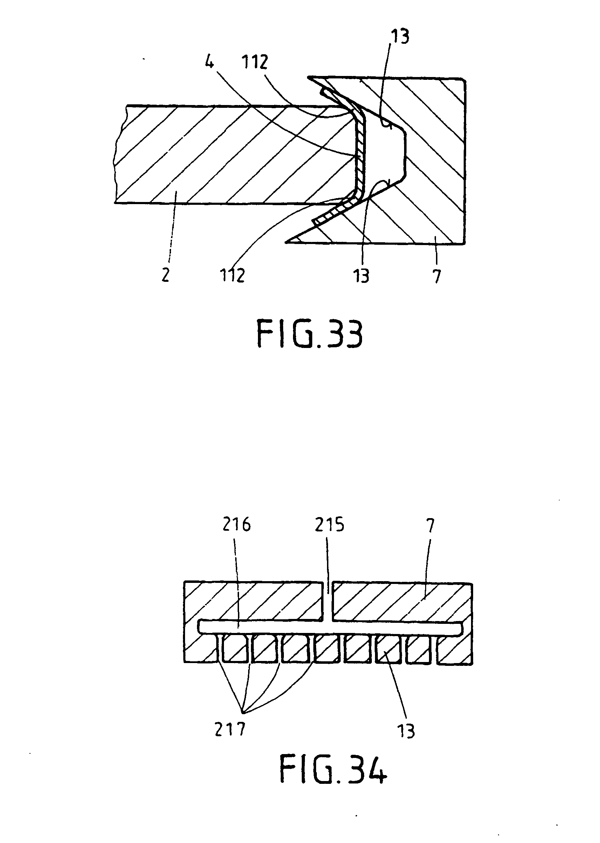

In einem vierten Verfahrensschritt (Figur 33) wird ein Gleitschuh 7 mit ebenen, im Winkel von etwa 60° zueinander angeordneten Andruckflächen 13 eingesetzt, der einen Preßdruck nur noch im Bereich der Grenzkanten 112 ausübt und damit für eine möglichst schmale und optisch nicht erkennbare Fuge zwischen dem bandförmigen Belag 4 und der in Figur 33 der Deutlichkeit halber nicht dargestellten Beschichtung 105 der Spanplatte 2 sorgt.

In einem letzten, in den Figuren nicht dargestellten Verfahrensschritt wird der Überstand des bandförmigen Belags 4 mit einem Ziehmesser abgeschnitten.

Erfindungsgemäß kann eine Beschichtung sowohl mit einer sogenannten "auslaufenden Kante" (Figur 18) als auch mit einer "eingelegten Kante" (Figur 19) hergestellt werden.

Bei der auslaufenden Kante liegt der Rand des bandförmigen Belages teilweise auf der Beschichtung 105 des Plattenelements auf. Im Falle der eingelegten Kante wird der Überstand des bandförmigen Belages 4 während des Beschichtens mit einem Trennmesser derart zugeschnitten, so daß der Rand des bandförmigen Belages 4 praktisch nahtlos an den Rand der Beschichtung 105 anschließt (Figur 19).

Beide Arten von Kanten sind mit dem erfindungsgemäßen Verfahren herstellbar.

In Figur 34 werden in einem Schnitt durch einen Gleitschuh die Kühlkanäle veranschaulicht. Ein Einlaß 215 führt zu einem sich in Längsrichtung des Gleitschuhs erstreckenden Verteilerkanal 216, der die eingespeiste und eventuell gekühlte Preßluft an Auslässe 217 weiterleitet, die an der Andruckfläche 13 des Gleitschuhs 7 enden.

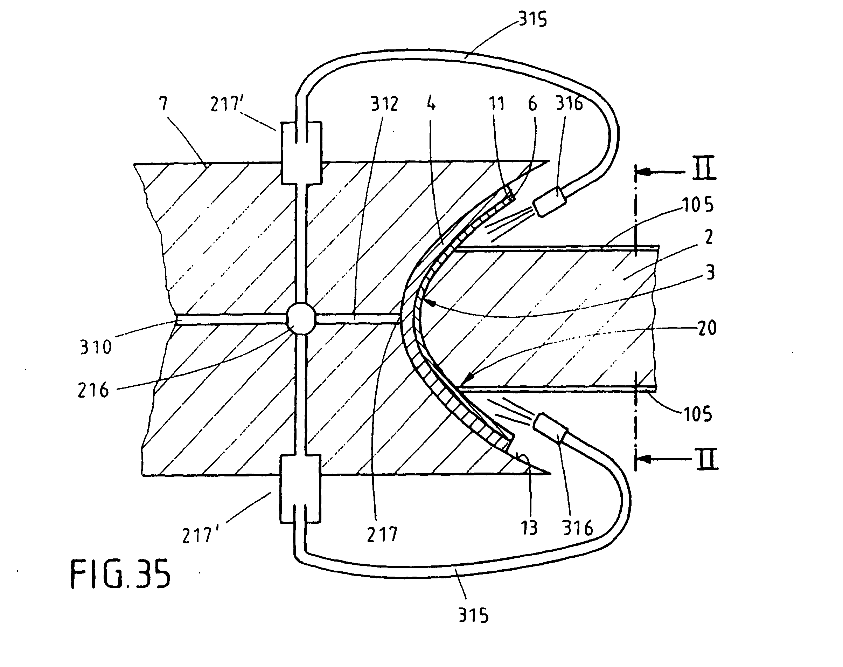

### Ausführungsbeispiel nach den Figuren 35 bis 38

Zur Erläuterung des Hintergrundes der Erfindung wird zunächst auf die Figuren 18, 19 und 38 eingegangen, die den Stand der Technik zeigen. In den Figuren 18 und 19 ist ein Schnitt durch ein Plattenelement 2, insbesondere eine Spanplatte, mit einer Beschichtung 105 seiner Breitflächen und mit einem angeklebten bandförmigen Belag 4 dargestellt. Zur Herstellung eines Plattenelementes mit einer eingelegten Kante (Figur 19) wird der beim Ankleben des bandförmigen Belages 4 entstehende Überstand während der Herstellung mit einem Trennmesser derart zugeschnitten, so daß die Oberfläche des bandförmigen Belages 4 praktisch unmittelbar in die Oberfläche der Beschichtung 105 übergeht.

Im Gegensatz dazu liegt bei der auslaufenden Kante der Rand des bandförmigen Belages teilweise auf dem schräg abgefrästen Rand der Beschichtung 105 des Plattenelementes auf. Die Oberflächen des Belages 4 und der Beschichtung 105 sind im fertigen Plattenelement durch einen Streifen getrennt, der beim schräg durch den Belag 4 erfolgenden Schnitt beim Abtrennen des Oberstandes entsteht. Im Gegensatz dazu erfolgt das Abtrennen des Überstandes im Falle der eingelegten Kante durch einen Schnitt senkrecht zur Oberfläche des Belages 4. Daher können hier auch bandförmige Beläge 4 eingesetzt werden, die nur an ihrer Oberfläche die gewünschte Struktur und Färbung aufweisen und z. B. bedruckt sind. Dagegen werden zur Herstellung einer auslaufenden Kante nach Figur 18 nur Beläge 4 eingesetzt, die vollständig durchgefärbt sind, so daß sich die streifenförmige Zone nicht von der übrigen Oberfläche des Belages 4 unterscheidet.

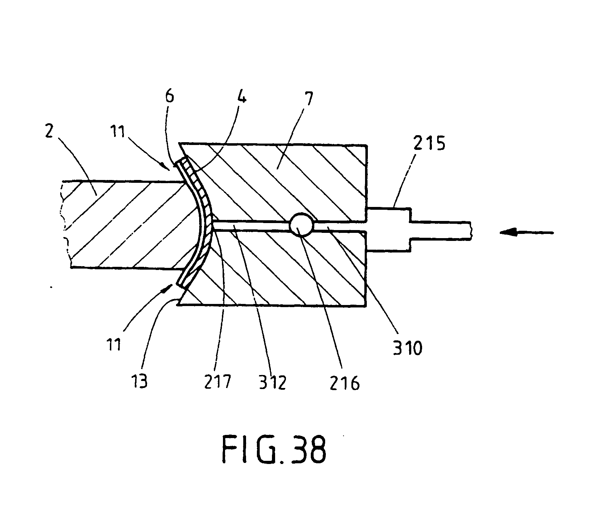

Figur 38 zeigt den vorletzten Verfahrensschritt beim Anleimen von Kanten nach dem Stand der Technik, bevor die Überstände des Belages abgetrennt werden. Der mit einem Schmelzklebstoff 6 an seiner Rückseite beschichtete bandförmige Belag 4 wird von einem Gleitschuh 7 an die abgerundete Schmalfläche 3 eines Plattenelementes 2, z. B. einer Spanplatte, angepreßt. Dabei wird ein Belag 4 eingesetzt, dessen Breite größer als die Breite der Schmalfläche 3 ist, so daß die Ränder des Belags 4 nach oben und unten überstehen. Im Anschluß an diesen Verfahrensschritt werden die Überstände 11 abgefräst oder mit einem Ziehmesser abgeschnitten.

Während des Anpressens wird der Gleitschuh gleichzeitig mit Luft gekühlt, welche über einen Einlaß 215, einen Kühlkanal 310 und einen Verteilerkanal 216 in eine Vielzahl von Kühlkanälen 312 einströmt, von denen in Figur 38 nur einer dargestellt ist. Die Kahlkanäle 312 haben Auslässe 217 an der Andruckfläche 13 des Gleitschuhs 7.

Der an der Schmalfläche 3 haftende Schmelzklebstoff 6 wird auf zweierlei Weise gekühlt. Zum einen nimmt die Schmalfläche 3, die etwa auf Raumtemperatur liegt, einen Teil der Wärme auf. Ein weiterer Wärmeanteil wird von der Andruckfläche 13 abgeführt. Im Gegensatz dazu ist die Wärmeabfuhr im Bereich der Überstände 11 in der Praxis jedoch nicht ausreichend, um den an den Überständen 11 haftenden Schmelzklebstoff soweit abzukühlen, daß er seine Klebrigkeit verliert. Beim Abtrennen der Überstände 11 treten daher die bereits oben genannten Probleme auf.

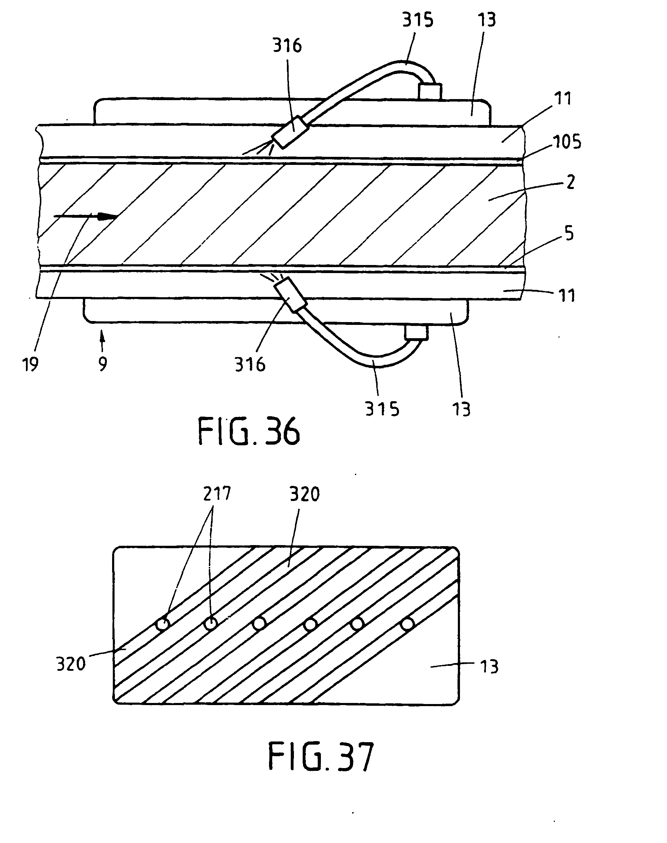

Erfindungsgemäß wird ein Gleitschuh nach den Figuren 35 und 36 eingesetzt. In Figur 35 sowie in Figur 38 wurde die Dicke des Belages 4 der Deutlichkeit halber übertrieben stark dargestellt. Nicht nur bei der in Figur 35 dargestellten gekrümmten, sondern auch bei einer geraden Schmalfläche läßt sich diese Kühlung einsetzen. Auch eine einseitige Kühlung, z. B. nur von oben, ist möglich (Figur 35).

Im Gegensatz zum Stand der Technik sind hier zwei weitere Auslässe 217' an der Ober- und Unterseite des Gleitschuhs 7 vorgesehen, an die jeweils eine Leitung 315 für die Kühlluft angeschlossen ist. Die Auslässe der Leitungen 315 bestehen aus jeweils einem Kunststoff-Röhrchen 316.

Wie aus Figur 35 deutlich hervorgeht, sind die Auslässe 316 der Leitungen 315 unmittelbar auf den Schmelzklebstoff 6 des Überstandes 11 und zwar auf den Grenzbereich 20 zwischen dem Überstand 11 und dem Plattenelement 2 gerichtet.

Zusätzlich sind die Auslässe 316 der Leitungen 315 in Richtung auf die Einlaufzone 9 des Gleitschuhs ausgerichtet, wie aus Figur 36 hervorgeht. Der Pfeil 19 gibt die Vorschubrichtung des Plattenelementes 2 an, wobei der Gleitschuh 7 stationär an der nicht dargestellten Kantenanleimmaschine befestigt ist.

Schließlich wird in Figur 37 eine besondere Ausgestaltung der Andruckfläche 13 des Gleitschuhs dargestellt. In der Andruckfläche 13 sind Nuten 320 vorgesehen, welche über die Auslässe 217 der Kühlkanäle 312 und schräg zur Vorschubrichtung 19 des Plattenelementes verlaufen. Derartige Nuten 320 sind nicht unbedingt.erforderlich, können aber gegebenenfalls von Vorteil sein.

### Bezugszeichenliste

- 1: Andruckrolle
- 2: Plattenelement, Spanplatte
- 3: Schmalfläche
- 4: bandförmiger Belag
- 5: Drehachse
- 6: Schmelzklebstoff
- 7: Gleitschuh
- 7': Andruckrolle
- 8: weiterer Gleitschuh
- 9: Einlaufzone
- 10: Auslaufzone
- 11: überstehender Rand, Überstand
- 12: Kontaktbereich
- 13: Andruckfläche
- 14: mittlerer Bereich
- 16: strichpunktierte Linie
- 17: Trennfläche
- 18: Bereich
- 19: Pfeil
- 20: Grenzbereich, Anpreßlinie, Kontaktbereich
- 21: Spalt
- 101: konkaves teilkreisförmiges Profil
- 105: Kunststoffmaterial, beschichtete Fläche
- 112: Grenzkante
- 113: ebener Bereich
- 114: gestrichelte Linie
- 115: gestrichelte Linie
- 210: Dickkante
- 214: Pfeil.
- 215: Einlaß
- 216: Verteilerkanal
- 217: Auslaß
- 217': weiterer Auslaß
- 310: Kühlkanal
- 312: Kühlkanal
- 315: Leitung
- 316: Kunststoff-Röhrchen, Auslaß der Leitung 315
- 320: Nut

## Patentansprüche

1. Andruckelement (7) für eine Kantenanleimmaschine zum Anleimen eines bandförmigen Belags (4) mit einem Klebstoff (6) an eine im Querschnitt gerade oder gekrümmte Schmalfläche (3) eines Plattenelements (2), insbesondere einer Span-, Faser- oder Massivholzplatte,
**dadurch gekennzeichnet,**
**dass** das Andruckelement als Gleitschuh (7) ausgebildet ist und einen linienartigen Kontaktbereich (12) aufweist, wobei die dem Belag (4) zugewandte Fläche des Gleitschuhs (7) im Querschnitt spitz zuläuft.

2. System von Andruckelementen (1, 7, 8) für eine Kantenanleimmaschine zum Andrücken eines mit Klebstoff (6) beschichteten bandförmigen Belags (4) an eine im Querschnitt gerade oder gekrümmte Schmalfläche (3) eines Plattenelements (2), insbesondere einer Span-, Faser- oder Massivholzplatte.
**dadurch gekennzeichnet,**
**dass** das als zeitlich erstes einzusetzendes Andruckelement als an sich bekannte Andruckrolle (1), das danach einzusetzende Andruckelement als Gleitschuh (7) nach einem der vorhergehenden Ansprüche und das danach einzusetzende Andruckelement als weiterer Gleitschuh (8) ausgebildet ist, welcher beim Andrücken nur auf eine oder beide Grenzbereiche zwischen der Schmalfläche (3) und den Breitflächen des Plattenelementes (2) wirkt, ohne dass der Belag in den Grenzbereichen geknickt wird.

3. Andruckelement nach Anspruch 1,
**dadurch gekennzeichnet,**
**dass** der den Belag (4) als erstes anpressende erste Bereich (9) der Andruckfläche so ausgebildet ist, dass der Belag nur an einem Längsstreifen der Schmalfläche (3) angepresst wird, und dass die nachfolgenden Bereiche (20) so ausgebildet sind, dass deren Kontaktbereich, ausgehend vom Kontaktbereich des vorherigen Bereichs, quer zur Längsrichtung und kontinuierlich ausgeweitet ist.

4. Andruckelement nach Anspruch 3,
**dadurch gekennzeichnet,**
**dass** die zeitlich nachfolgenden Kontaktbereiche die vorherigen Kontaktbereiche nicht einschließen.

5. Andruckelement nach Anspruch 3 oder 4,
**dadurch gekennzeichnet,**
**dass** die Andruckfläche (101) im wesentlichen der geometrischen Form der Schmalfläche (3) des Plattenelements (2) angepasst ist und dass die Änderung des Kontaktbereichs (20) in Längsrichtung durch Abtrennen eines oberen Bereichs des Gleitschuhs bewirkt wird, wobei die Trennfläche (17) in Längsrichtung schräg verläuft.

6. System von Andruckelementen für eine Kantenanleimmaschine zum Andrücken eines mit Klebstoff (6) beschichteten bandförmigen Belags (4) an eine im Querschnitt gerade oder gekrümmte Schmalfläche (3) eines Plattenelementes (2), insbesondere einer Span-, Faser- oder Massivholzplatte,
**dadurch gekennzeichnet,**
**dass** mehrere hintereinander angeordnete Andruckelemente (7', 7) vorgesehen sind, die derart an das Profil der Schmalfläche (3) angepasst sind, so dass das den Belag (4) als erstes anpressende Andruckelement (7') eine Andruckfläche hat, die den Belag nur an einen Längsstreifen der Schmalfläche (3) anpresst und dass das bzw. die nachfolgenden Andruckelemente als Gleitschuh (7) nach einem der vorhergehenden Ansprüche ausgebildet ist / sind, die jeweils eine Andruckfläche (13) mit einem Kontaktbereich haben, der, ausgehend vom Kontaktbereich des vorherigen Andruckelements (7', 7), ausgeweitet ist und vorzugsweise den Kontaktbereich des vorausgegangenen Andruckelements (7', 7) einschließt.

7. Andruckelemente nach Anspruch 6,
**dadurch gekennzeichnet,**
**dass** das erste Andruckelement als eine drehbare Andruckrolle (7') und die nachfolgenden Andruckelemente als Gleitschuhe (7) ausgebildet sind.

8. Andruckelemente nach Anspruch 7,
**dadurch gekennzeiehnet,**
dass die Andruckflächen (13) der Gleitschuhe (7) teilkreisförmig ausgebildet sind, wobei die nachfolgenden Gleitschuhe (7) Andruckflächen (13) mit kleineren Krümmungsradien als die vorhergehenden Gleitschuhe (7) haben.

9. Andruckelement nach Anspruch 1, in Form eines Gleitschuhs (7), **dadurch gekennzeichnet, dass** es Kühlkanäle (310, 216, 312) mit mindestens einem Einlass (215) und mindestens einem Auslaß (217, 217') für das Kühlmedium aufweist, wobei
eine Leitung (315) für das Kühlmedium an den Auslaß (217') angeschlossen ist und der Auslaß (16) der Leitung (315) derart angeordnet ist, so dass das aus der Leitung (315) strömende Kühlmedium im Betrieb auf den Überstand (11) des bandförmigen Belages (4) und insbesondere auf die Rückseite des Überstandes (11) gerichtet ist.

10. Verfahren zum Anleimen eines bandförmigen Belags (4) an eine Schmalfläche (3) eines Plattenelements (2), insbesondere einer Span-, Faser- oder Massivholzplatte, wobei man den Belag (4) mit mindestens einem Andruckelement (1, 7, 8) an die Schmalfläche anpresst,
**dadurch gekennzeichnet,**
**dass** das oder die Andruckelemente als Gleitschuh (7) mit einem linienartigen Kontaktbereich (12) ausgebildet ist / sind, der im Winkel zur Längsrichtung der Schmalfläche (3) oder an der Grenzkante zwischen Schmalfläche (3) und Breitfläche des Plattenelements angeordnet wird.

11. Verfahren nach Anspruch 10,
**dadurch gekennzeichnet,**
**dass** man den bandförmigen Belag (4) zunächst nur an einen Längsstreifen der Schmalfläche (3) anpresst und dass man danach den Kontaktbereich (20), ausgehend von dem genannten Längsstreifen, ausweitet, bis der bandförmige Belag (4) im gesamten Bereich der Schmalfläche angepresst worden ist, und dass der jeweils nachfolgende Kontaktbereich den vorherigen Kontaktbereich nicht einschließt.

12. Verfahren nach Anspruch 10 oder 11,
**dadurch gekennzeichnet, dass** das Plattenelement ein- oder zweiseitig beschichtet ist und dass man in einem letzten Anpressschritt nur den Bereich des Belages (4), der an die beschichtete(n) Seite(n) (5) des Plattenelements (2) angrenzt, anpresst.

13. Verfahren nach Anspruch 10 zum Herstellen eines beschichteten Plattenelementes (2) mit mindestens einer einen auslaufenden Rand aufweisenden beschichteten Schmalfläche (3), durch Anleimen eines bandförmigen, mit einem Schmelzklebstoff beschichteten Belags (4) an eine Schmalfläche des ein- oder zweiseitig beschichteten Plattenelements (2), insbesondere einer Span-, Faser- oder Massivholzplatte,
**dadurch gekennzeichnet,**
**dass** man den in seiner Breite größer als die zu beschichtende Breite der Schmaifläche (3) ausgeführten Belag (4) unter Druck an die Schmalfläche (3) anklebt, wobei man zunächst den Belag (4) vollständig an die zu beschichtende Breite der Schmalfläche (3) anpresst, bevor man den Schmelzklebstoff am Überstand (11) des Belages (4) abkühlt, und schließlich den Überstand (11) abtrennt.

## Claims

1. Presser element (7) for a edge gluing machine for gluing a strip-shaped covering (4) by an adhesive (6) to a narrow surface (3), which is straight or curved in cross-section, of a plate element (2), particularly a particle-board, fibreboard or solid wood plate, **characterised in that** the presser element is constructed as a slide shoe (7) and has a lineal contact region (12), wherein the surface of the slide shoe (7) facing the covering (4) runs to a point in cross-section.

2. System of presser elements (1, 7, 8) for an edge gluing machine for gluing a strip-shaped covering (4) coated with an adhesive (6) to a narrow surface (3), which is straight or curved in cross-section, of a plate element (2), particularly a particle-board, fibreboard or solid wood plate, **characterised in that** the presser element, which is the first to be used in terms of time, is constructed as a presser roller (1) known per se, the presser element to be used thereafter is constructed as a slide shoe (7) according to one of the preceding claims and the presser element to be used thereafter is constructed as further slide shoe (8), which on pressing acts on only one or both boundary regions between the narrow surface (3) and the wide surfaces of the plate element (2) without the covering being creased in the boundary regions.

3. Presser element according to claim 1, **characterised in that** the covering (4) is so constructed as a first region (9), which is first to be pressed, of the press surface that the covering is pressed only at a longitudinal strip of the narrow surface (3) and that the following regions (20) are so constructed that the contact region thereof is widened transversely to the longitudinal direction and continuously starting from the contact region of the previous region.

4. Presser element according to claim 3, **characterised in that** the contact regions, which follow in time, do not include the previous contact regions.

5. Presser element according to claim 3 or 4, **characterised in that** the press surface (101) is substantially matched to the geometric shape of the narrow surface (3) of the plate element (2) and that the change in the contact region (20) is produced in longitudinal direction by separating off an upper region of the slide shoe, wherein the separating surface (17) extends obliquely in longitudinal direction.

6. System of presser elements for a edge gluing machine for pressing a strip-shaped covering (4), which is coated with adhesive (6), against a narrow surface (3), which is straight or curved in cross-section, of a plate element (2), particularly a particle-board, fibreboard or solid wood plate, **characterised in that** several presser elements (7', 7) arranged in succession are provided and are so matched to the profile of the narrow surface (3) that the presser element (7'), which is to first press the covering (4), has a press surface which presses the covering only at a longitudinal strip of the narrow surface (3) and that the succeeding presser element or elements is or are constructed as slide shoe (7) according to one of the preceding claims, which have a respective press surface (13) with a contact region which is widened starting from the contact region of the preceding presser element (7', 7) and preferably includes the contact region of the preceding presser element (7', 7).

7. Presser elements according to claim 6, **characterised in that** the first presser element is constructed as a rotatable presser roller (7') and the following presser elements are constructed as slide shoes (7).

8. Presser elements according to claim 7, **characterised in that** the press surfaces (13) of the slide shoes (7) are constructed to be of partly circular shape, wherein the following slide shoes (7) have press surfaces (13) with smaller radii of curvature than the preceding slide shoes (7).

9. Presser element according to claim 1, in the form of a slide shoe (7), **characterised in that** it has cooling channels (310, 216, 312) with at least one inlet (215) and at least one outlet (217, 217') for the coolant, wherein a duct (315) for the coolant is connected with outlet (217') and the outlet (16) of the duct (215) is arranged in such a manner that the coolant flowing out of the duct (315) is directed in operation onto the projection (11) of the strip-shaped covering (4) and in particular onto the rear side of the projection (11).

10. Method of gluing a strip-shaped covering (4) to a narrow surface (3) of the plate element (2), particularly a particle-board, fibreboard or solid wood plate, wherein the cover (4) is pressed against the narrow surface by at least one presser element (1, 7, 8), **characterised in that** the presser element or elements is or are constructed as slide shoe (7) with a lineal contact region (12), which is arranged at an angle to the longitudinal direction of the narrow surface (3) or at the boundary edge between narrow surface (3) and wide surface of the plate element.

11. Method according to claim 10, **characterised in that** the strip-shaped covering (4) is initially pressed only against a longitudinal strip of the narrow surface (3) and that thereafter the contact region (20) is widened, starting from the said longitudinal strip, until the strip-shaped covering (4) has been pressed in the entire region of the narrow surface and that the respective following contact region does not include the previous contact region.

12. Method according to claim 10 or 11, **characterised in that** the plate element is coated at one side or at two sides and that in a final pressing step only the region of a covering (4) adjoining the coated side or sides (5) or the plate element (2) is pressed.

13. Method according to claim 10 for producing a coated plate element (2) with at least one coated narrow surface (3) having an edge running out, by gluing a strip-shaped covering (4), which is coated with a hot-melt adhesive, to a narrow surface of the plate element (2) coated at one side or at both sides, particularly a particle-board, fibreboard or solid wood plate, **characterised in that** the covering (4), which is executed to be greater in its width than the width, which is to be coated, of the narrow surface (3), is glued under pressure to the narrow surface (3), wherein initially the covering (4) is pressed completely against the width of the narrow surface (3) to be coated before the hot-melt adhesive cools down at the projection (11) of the covering (4), and subsequently the projection (11) is removed.

## Revendications

1. Elément d'appui (7) pour une encolleuse de chants pour le collage d'un revêtement (4) sous forme de bande avec une colle (6) sur une surface étroite (3) droite ou incurvée en section d'un élément sous forme de panneau (2), en particulier d'un panneau de particules, d'un panneau de fibres ou d'un panneau de bois massif,
**caractérisé en ce que**
l'élément d'appui est conçu sous la forme d'un patin de glissement (7) et présente une zone de contact (12) en forme de ligne, la surface, tournée vers le revêtement (4), du patin de glissement (7) s'effilant en section.

2. Système d'éléments d'appui (1, 7, 8) pour une encolleuse de chants pour l'appui d'un revêtement (4) en forme de bande et recouvert de colle (6) sur une surface étroite (3), droite ou incurvée en section, d'un élément sous forme de panneau (2), en particulier d'un panneau de particules, d'un panneau de fibres ou d'un panneau de bois massif,
**caractérisé en ce que**
l'élément d'appui à utiliser en premier dans le temps est réalisé comme un galet d'appui (1) connu, l'élément d'appui à utiliser ensuite est réalisé comme un patin de glissement (7) selon l'une des revendications précédentes et l'élément d'appui à utiliser ensuite comme un autre patin de glissement (8), qui agit lors de l'appui seulement sur l'une ou sur les deux zones limites entre la surface étroite (3) et les surfaces larges de l'élément de panneau (2), sans que le revêtement soit plié dans les zones limites.

3. Elément d'appui selon la revendication 1,
**caractérisé en ce que**
la première zone (9), pressant en premier le revêtement (4) de la surface d'appui est conçue de telle sorte que le revêtement n'est pressé que sur une bande longitudinale de la surface étroite (3) et que les zones (20) consécutives sont conçues de sorte que leur zone de contact, à partir de la zone de contact de la zone préalable, est élargie transversalement au sens longitudinal et de façon continue.

4. Elément d'appui selon la revendication 3,
**caractérisé en ce que**
les zones de contact successives dans le temps n'incluent pas les zones de contact préalables.

5. Elément d'appui selon la revendication 3 ou 4,
**caractérisé en ce que**
la surface d'appui (101) est adaptée sensiblement à la forme géométrique de la surface étroite (3) de l'élément de panneau (2) et **en ce que** la variation de la zone de contact (20) est réalisée dans le sens longitudinal par la séparation d'une zone supérieure du patin de glissement, la surface de séparation (17) étant agencée en biais dans le sens longitudinal.

6. Système d'éléments d'appui pour une encolleuse de chants pour l'appui d'un revêtement (4) sous forme de bande et revêtue de colle (6) sur une surface étroite (3) droite ou incurvée en section d'un élément de panneau (2), en particulier d'un panneau de particules, d'un panneau de fibres ou d'un panneau de bois massif,
**caractérisé en ce que**
plusieurs éléments d'appui (7', 7) disposés les uns derrière les autres sont prévus, qui sont adaptés au profil de la surface étroite (3) de telle sorte que l'élément d'appui (7') appuyant en premier le revêtement (4) a une surface d'appui qui presse le revêtement seulement sur une bande longitudinale de la surface étroite (3) et **en ce que** le resp. les éléments d'appui consécutifs est/sont réalisé(s) comme patin de glissement (7) selon l'une des revendications précédentes, qui ont chacun une surface d'appui (13) avec une zone de contact qui est élargie à partir de la zone de contact de l'élément d'appui (7', 7) préalable et inclut de préférence la zone de contact de l'élément d'appui (7', 7) précédent.

7. Eléments d'appui selon la revendication 6,
**caractérisés en ce que**
le premier élément d'appui est réalisé comme un galet d'appui (7') rotatif et les éléments d'appui consécutifs comme des patins de glissement (7).

8. Eléments d'appui selon la revendication 7,
**caractérisés en ce que**
les surfaces d'appui (13) des patins de glissement (7) sont réalisées en forme de cercle partiel, les patins de glissement (7) consécutifs ayant des surfaces d'appui (13) avec des rayons de courbure plus petits que les patins de glissement (7) précédents.

9. Elément d'appui selon la revendication 1, sous la forme d'un patin de glissement (7), **caractérisé en ce qu'**il présente des canaux de refroidissement (310, 216, 312) avec au moins une entrée (215) et au moins une sortie (217, 217') pour le fluide de refroidissement, une conduite (315) pour le fluide de refroidissement étant raccordée à la sortie (217') et la sortie (16) de la conduite (315) étant disposée de telle sorte que le fluide de refroidissement sortant de la conduite (315) est orienté pendant le service vers le porte-à-faux (11) du revêtement (4) sous forme de bande et en particulier vers le côté arrière du porte-à-faux (11).

10. Procédé pour le collage d'un revêtement (4) sous forme de bande sur une surface étroite (3) d'un élément sous forme de panneau (2) en particulier d'un panneau de particules, d'un panneau de fibres ou d'un panneau de bois massif, moyennant quoi on presse le revêtement (4) avec au moins un élément d'appui (1, 7, 8) sur la surface étroite,
**caractérisé en ce que**
le ou les éléments d'appui est/sont réalisé(s) comme un patin de glissement (7) avec une zone de contact (12) en forme de ligne, qui est disposée dans l'angle par rapport au sens longitudinal de la surface étroite (3) ou sur l'arête limite entre la surface étroite (3) et la surface large de l'élément de panneau.

11. Procédé selon la revendication 10,
**caractérisé en ce que**
on appuie le revêtement (4) en forme de bande d'abord seulement sur une bande longitudinale de la surface étroite (3) et **en ce qu'**on élargit ensuite la zone de contact (20), à partir de la bande longitudinale citée, jusqu'à ce que le revêtement (4) en forme de bande ait été appuyée dans l'ensemble de la zone de la surface étroite, et **en ce que** la zone de contact suivante respective n'inclut pas la zone de contact préalable.

12. Procédé selon la revendication 10 ou 11,
**caractérisé en ce que** l'élément de panneau est revêtu sur un côté ou sur les deux côtés et **en ce qu'**on appuie lors d'une dernière étape d'appui seulement sur la zone du revêtement (4) qui est contiguë au(x) côté(s) (5) revêtu(s) de l'élément de panneau (2).

13. Procédé selon la revendication 10 pour la fabrication d'un élément de panneau (2) revêtu avec au moins une surface étroite (3) recouverte et présentant un bord de sortie, par collage d'un revêtement (4) en forme de bande et revêtu d'une colle fusible sur une surface étroite de l'élément sous forme de panneau (2) recouvert sur un côté ou deux côtés, en particulier d'un panneau de particules, d'un panneau de fibres ou d'un panneau de bois massif,
**caractérisé en ce que**
on colle le revêtement (4) réalisé plus grand dans sa largeur que la largeur à recouvrir de la surface étroite (3) en exerçant une pression sur la surface étroite (3), moyennant quoi on presse d'abord le revêtement (4) complètement sur la largeur à revêtir de la surface étroite (3) avant qu'on refroidisse la colle fusible sur le porte-à-faux (11) du revêtement (4) et qu'on sépare enfin le porte-à-faux (11).
